# EUROPEAN PATENT SPECIFICATION

(11) **EP 3 468 878 B1**
(45) Date of publication and mention of the grant of the patent: **15.07.2020**
(21) Application number: 17805366.6
(22) Date of filing: 13.11.2017
(51) Int. Cl.: A01P 1/00, B65B 55/18, A01N 59/00, B65B 25/00, B65D 25/14, B65D 85/72

(54) **ANTIMICROBIAL GAS RELEASING AGENTS AND SYSTEMS AND METHODS FOR USING THE SAME**
ANTIMIKROBIELLE GASFREISETZENDE STOFFE UND SYSTEME UND VERFAHREN ZU DEREN NUTZUNG
AGENTS ET SYSTÈMES DÉGAGEANT DES GAZ ANTIMICROBIENS ET PROCÉDÉ POUR LEUR EMPLOI

(30) Priority: 13.11.2016 US 201662421348 P
(43) Date of publication of application: 17.04.2019
(73) Proprietor: CSP Technologies, Inc., Auburn, Alabama 36832 (US)
(72) Inventor: FREEDMAN, Jonathan R., Auburn Alabama 36830 (US); GUPTA, Deepti S., Glenn Allen Virginia 23059 (US); JOHNSTON, Michael A., Marietta Georgia 30060 (US); BELFANCE, John, Phenix City Alabama 36867 (US)
(74) Representative: Maiwald Patent- und Rechtsanwaltsgesellschaft mbH
(86) International application number: PCT/US2017/061389
(87) International publication number: WO 2018/089933

(56) References cited:
- WO-A1-96/39200
- WO-A1-99/61005
- WO-A1-03/013843
- WO-A1-2005/041660
- WO-A1-2014/172543
- WO-A1-2017/031349
- WO-A1-2019/006420
- US-A1- 2017 332 674

## Description

### BACKGROUND OF THE INVENTION

### 1. Field of the Invention

This invention relates to packages and methods for reducing and preventing the growth of microbes, or for killing microbes, within an interior space of a container and/or on product/good that is stored in the package. More particularly, the invention relates to packages and methods for reducing and preventing growth of microbes, or for killing microbes, e.g., in food containers, using polymers entrained with antimicrobial releasing agents.

### 2. Description of Prior Art

There are many items that are preferably stored, shipped and/or utilized in an environment that must be controlled and/or regulated. For example, in the moisture control field, containers and/or packages having the ability to absorb excess moisture trapped therein have been recognized as desirable. Likewise, in packaging products that carry a risk of contamination, e.g., food, it may be desirable to control the growth and proliferation of microbes.

Food products, particularly sliced or cut fresh foodstuffs such as meat, poultry, fruit, and vegetables are typically stored and sold in a supporting container, e.g., tray, that is overwrapped by a transparent plastic film, enabling visual inspection of the food products. These food products generally produce an exudate (i.e., juices), which can be a source for the growth of microbial agents. In addition, contamination of processing equipment or other surfaces with which the food products come into contact may remain with the food and proliferate while packaged. Similarly, food products may be contaminated even before the packaging process. For example, a tomato may have an opening in its skin through which unwanted microorganisms enter and replicate. Breakdown in the food handling process and/or cold chain management (e.g., refrigeration during food transport breaks for several hours) can allow microbial growth of contaminated food, potentially leading to outbreaks of food borne illness. Regardless of the source or nature of microbial contamination in food, the shelf-life and safety of the contaminated food products is affected by contamination and proliferation of microbes.

One way that the food industry has addressed preservation of foodstuffs is by including food grade preservatives as a component of the food, such as potassium sorbate, sodium benzoate and nitrites. However, such preservatives are regarded by some in the health field and consumers as being unnatural and presenting health risks. Moreover, it is not practical to use such preservatives with non-processed foods, for example fresh fruits or vegetables.

Another way that the food industry has addressed food preservation is to utilize antimicrobial agents that directly contact the food as a component in packaging material. However, such direct contact may be undesirable in some applications.

For certain applications, it is desirable to provide antimicrobial agents to release antimicrobial gas into a headspace of the food product package or container to control the growth of microbes, as compared to a solid or liquid component that requires direct contact with the stored food in order to be effective. However, there are challenges with providing the antimicrobial gas in the headspace. One such challenge is attaining a desired release profile of antimicrobial gas within the headspace during a designated time period. Failure to attain the appropriate release profile for a given product may result in a failure to achieve the desired shelf life for that product. Thus, there exists a need for improved delivery of antimicrobial agents to control, reduce and substantially destroy microbial contamination in food packaging as well as other applications, such as packaging of sterilized disposable medical devices. A challenge in meeting this need is maintaining a balance between providing sufficient antimicrobial gas in the package headspace to effectively control and/or kill pathogens while not "overdosing" the package headspace, which could adversely affect the quality of the product, e.g., by organoleptic degradation.

WO 2017/031349 describes a multilayer medical packaging film including a first layer and a chlorine dioxide-producing layer, the latter including a polymer composition and a plurality of chlorite ions.

### SUMMARY OF THE INVENTION

Accordingly, in one aspect, the invention provides:
A package for inhibiting or preventing growth of microbes and/or for killing microbes in a closed container having a product located therein, the package comprising:
a. a closed container defining an interior space therein;
b. a product provided within the interior space;
c. a headspace formed within a volume of the interior space that is not occupied by the product; and
d. an antimicrobial releasing agent disposed within the interior space, the antimicrobial releasing agent releasing chlorine dioxide gas into the headspace by reaction of moisture with the antimicrobial releasing agent,
wherein the antimicrobial releasing agent is provided in at least one entrained polymer article located within the interior space, the entrained polymer article comprising a monolithic material that includes a base polymer, the antimicrobial releasing agent and a channeling agent, wherein the monolithic material features channels through the entrained polymer formed of the channeling agent, wherein the base polymer is a polypropylene, polyethylene, polyisoprene, polybutadiene, polybutene, polysiloxane, polycarbonate, polyamide, ethylene-vinyl acetate copolymer, ethylene-methacrylate copolymer, poly(vinyl chloride), polystyrene, polyester, polyanhydride, polyacrylonitrile, polysulfone, polyacrylic ester, polyurethane, polyacetal, or a copolymer or mixture thereof, and wherein the channeling agent is a polyethylene glycol (PEG), ethylene-vinyl alcohol (EVOH), polyvinyl alcohol (PVOH), glycerin polyamine, polyurethane, polycarboxylic acid, propylene oxide polymerisate-monobutyl ether, propylene oxide polymerisate, ethylene-vinyl acetate, nylon 6, nylon 66, or a mixture thereof.

In another aspect, the invention provides a method for inhibiting or preventing the growth of microbes and/or for killing microbes in a closed container having a good located therein. The method includes:
a. providing a closed container defining an interior space therein;
b. providing a food product within the interior space;
c. providing a headspace formed within a volume of the interior space that is not occupied by the product; and
d. providing an antimicrobial releasing agent within the interior space that releases chlorine dioxide into the headspace by reaction of moisture with the antimicrobial releasing agent, wherein the antimicrobial releasing agent is provided in an amount sufficient to release the chlorine dioxide gas to provide a desired headspace concentration of the chlorine dioxide gas over a predetermined amount of time.
The antimicrobial releasing agent is provided in at least one entrained polymer article located within the interior space, the entrained polymer article comprising a monolithic material that includes a base polymer, the antimicrobial releasing agent and a channeling agent, wherein the monolithic material features channels through the entrained polymer formed of the channeling agent, wherein the base polymer is a polypropylene, polyethylene, polyisoprene, polybutadiene, polybutene, polysiloxane, polycarbonate, polyamide, ethylene-vinyl acetate copolymer, ethylene-methacrylate copolymer, poly(vinyl chloride), polystyrene, polyester, polyanhydride, polyacrylonitrile, polysulfone, polyacrylic ester, polyurethane, polyacetal, or a copolymer or mixture thereof, and wherein the channeling agent is a polyethylene glycol (PEG), ethylene-vinyl alcohol (EVOH), polyvinyl alcohol (PVOH), glycerin polyamine, polyurethane, polycarboxylic acid, propylene oxide polymerisate-monobutyl ether, propylene oxide polymerisate, ethylene-vinyl acetate, nylon 6, nylon 66, or a mixture thereof. If the product is contaminated by at least one type of pathogen at the time the product is provided within the interior space, the antimicrobial releasing agent providing a controlled release of chlorine dioxide gas to effectuate, after a span of 13 days under storage conditions of 7°C, at least a 2 log base 10 reduction in CFU/g of the at least one type of pathogen

The product provided within the interior space is optionally a food product.. The antimicrobial releasing agent is provided in an amount that releases the chlorine dioxide gas to provide a headspace concentration of from 10 parts per million (PPM) to 35 PPM for a period of 16 hours to 36 hours, optionally from 15 PPM to 30 PPM for a period of 16 hours to 36 hours, optionally from 15 PPM to 30 PPM for a period of about 24 hours.

Optionally, in any embodiment, when the product is provided within the interior space, the product is contaminated by at least one type of pathogen. The antimicrobial releasing agent provides a controlled release of chlorine dioxide gas to effectuate, after a span of 13 days from when the product is provided within the interior space and under storage conditions of 7°C, at least a 2 log base 10 reduction in colony forming units per gram (CFU/g), optionally at least a 3 log base 10 reduction in CFU/g, of the at least one type of pathogen, optionally at least a 4 log base 10 reduction in CFU/g, of the at least one type of pathogen. Optionally, the at least one pathogen is Salmonella, E. Coli, Listeria and/or Geotrichum.

Optionally, if the product is a food product and the amount of antimicrobial releasing agent and/or chlorine dioxide gas is present in an amount sufficient to effectuate the at least 2 log base 10 reduction in CFU/g, (or at least 3 log base 10 or 4 log base 10 reduction in CFU/g), of the at least one type of pathogen, such efficacy does not come at the expense of organoleptic degradation of the food product. For example the food product is not bleached or otherwise discolored.

The antimicrobial releasing agent is provided in at least one entrained polymer article located within the interior space. The entrained polymer article is a monolithic material that includes a base polymer, the antimicrobial releasing agent and a channeling agent. Preferably, such entrained polymer is provided as a film having a thickness of from 0.1 mm to 1.0 mm, preferably from 0.2 mm to 0.6 mm, optionally about 0.3 mm. Preferably, such film is provided above the midline (preferably at least 2/3 or 3/4) of the container sidewalls, which the inventors have found helps to attain a desired antimicrobial gas release profile.

Optionally, in any embodiment, the antimicrobial releasing agent is a powdered mixture comprising an alkaline metal chlorite, preferably sodium chlorite. Optionally, the powdered mixture further comprises at least one catalyst, optionally sulfuric acid clay, and at least one humidity trigger, optionally calcium chloride.

A method is provided for inhibiting or preventing the growth of microbes and/or for killing microbes in a closed container having a food product located therein. The method includes providing a closed container defining an interior space therein and a food product within the interior space. A headspace is formed within a volume of the interior space that is not occupied by the product. An antimicrobial releasing agent (such as that disclosed in this Summary section and elsewhere in this specification) is provided in the interior space. The agent releases an antimicrobial gas into the headspace by reaction of moisture with the antimicrobial releasing agent. The antimicrobial releasing agent is provided in an amount sufficient to release the antimicrobial gas to provide a desired headspace concentration of the antimicrobial gas over a predetermined amount of time. According to the method, if the product is contaminated by at least one type of pathogen at the time the product is provided within the interior space, the antimicrobial releasing agent optionally provides a controlled release of antimicrobial gas to effectuate, after a span of 13 days under storage conditions of 7°C, at least a 2 log base 10 reduction in CFU/g, optionally at least a 3 log base 10 reduction in CFU/g, optionally at least a 4 log base 10 reduction in CFU/g, of the at least one type of pathogen. Preferably, this method effectuates the reduction without causing organoleptic degradation of the food product, for example without bleaching or otherwise causing discoloration of the food product. Preferably, the antimicrobial releasing agent is provided in an entrained polymer film, for example as described herein.

The present invention, in another aspect, also provides use of the package according to the invention for storing a food product, wherein the food product exudes moisture that activates the antimicrobial releasing agent to release chlorine dioxide gas in the headspace. This use may attain desired headspace antimicrobial gas concentrations as described herein. This use may effectuate, after a span of 13 days from when the product is provided within the interior space and under storage conditions of 7°C, at least a 2 log base 10 reduction in colony forming units per gram (CFU/g), optionally at least a 3 log base 10 reduction in CFU/g, optionally at least a 4 log base 10 reduction in CFU/g, of the at least one type of pathogen. This is preferably done without causing organoleptic degradation of the food product, for example without bleaching or otherwise discoloring the food product.

### BRIEF DESCRIPTION OF THE DRAWINGS

The invention will be described in conjunction with the following drawings in which like reference numerals designate like elements and wherein:
FIG. 1 is a perspective view of a plug formed of an entrained polymer used in the present invention.
FIG. 2 is a cross section taken along line 2-2 of FIG. 1;
FIG. 3 is a cross section similar to that of FIG. 2, showing a plug formed of another entrained polymer used in the present invention;
FIG. 4 is a schematic illustration of an entrained polymer used in the present invention, in which the active agent is an antimicrobial gas releasing material that is activated by contact with a selected material (e.g., moisture).
FIG. 5 is a cross sectional view of a sheet or film formed of an entrained polymer used in an embodiment of the present invention, adhered to a barrier sheet substrate.
FIG. 6 is a cross section of a package that may be formed using an entrained polymer according to an embodiment of the present invention.
FIG. 7 is a perspective view of an exemplary package incorporating entrained polymer films according to an embodiment of the present invention.
FIGS. 8A and 8B are plots comparing Geotrichum growth on contaminated tomatoes stored in packages respectively with and without use of antimicrobial entrained polymer film.
FIG. 9 is a plot showing the measured amount of ClO₂ (chlorine dioxide) provided within a headspace of a container including entrained polymer film, in accordance with certain embodiments of the invention.
FIG. 10 is a plot showing the measured amount of ClO₂ provided within a headspace of a container including an entrained polymer film positioned at varying heights on the sidewall, in accordance with certain embodiments of the invention.
FIG. 11 is a plot showing the log CFU/gram reduction in *Salmonella* for foodstuff stored in containers with an entrained polymer film being positioned therein, in accordance with certain embodiments, as compared to containers absent of the entrained polymer film.
FIG. 12 is a plot showing the log CFU/gram reduction in *E. Coli* for foodstuff stored in containers with an entrained polymer film being positioned therein, in accordance with certain embodiments, as compared to containers absent of the entrained polymer film.
FIG. 13 is a plot showing the log CFU/gram reduction in *Listeria* for foodstuff stored in containers with an entrained polymer film being positioned therein, in accordance with certain embodiments, as compared to containers absent of the entrained polymer film.
FIG. 14 is a plot showing the measured amounts of ClO₂ provided within a headspace of a container depending on the amount of entrained antimicrobial polymer film provided in the container.

### DETAILED DESCRIPTION OF PREFERRED EMBODIMENTS

### Definitions

As used herein, the term "active" is defined as capable of acting on, interacting with or reacting with a selected material (e.g., moisture or oxygen) according to the invention. Examples of such actions or interactions may include absorption, adsorption or release of the selected material. Another example of "active", which is pertinent to a primary focus of the present invention is an agent capable of acting on, interacting with or reacting with a selected material in order to cause release of a released material.

As used herein, the term "active agent" is defined as a material that (1) is preferably immiscible with the base polymer and when mixed and heated with the base polymer and the channeling agent, will not melt, i.e., has a melting point that is higher than the melting point for either the base polymer or the channeling agent, and (2) acts on, interacts or reacts with a selected material. The active agents of primary focus in this specification are those that release antimicrobial gas, namely chlorine dioxide gas.

The term "antimicrobial releasing agent" refers to an active agent that is capable of releasing a released antimicrobial material, e.g. in gas form. This active agent may include an active component and other components (such as a catalyst and trigger) in a formulation (e.g., powdered mixture) configured to release the antimicrobial gas. A "released antimicrobial material" is a compound that inhibits or prevents the growth and proliferation of microbes and/or kills microbes, in the context of the present invention this is chlorine dioxide gas. The released antimicrobial material is released by the antimicrobial releasing agent. By way of example only, an antimicrobial releasing agent may be triggered (e.g., by chemical reaction or physical change) by contact with a selected material (such as moisture). For example, moisture may react with an antimicrobial releasing agent to cause the agent to release a released antimicrobial material.

As used herein, the term "base polymer" refers to a polymer optionally having a gas transmission rate of a selected material that is substantially lower than, lower than or substantially equivalent to, that of the channeling agent. By way of example, such a transmission rate is a water vapor transmission rate in embodiments where the selected material is moisture and the active agent is an antimicrobial gas releasing agent that is activated by moisture. This active agent may include an active component and other components in a formulation configured to release the antimicrobial gas. The primary function of the base polymer is to provide structure for the entrained polymer.

Suitable base polymers for use in the invention include thermoplastic polymers, e.g., polyolefins such as polypropylene and polyethylene, polyisoprene, polybutadiene, polybutene, polysiloxane, polycarbonates, polyamides, ethylene-vinyl acetate copolymers, ethylene- methacrylate copolymer, poly(vinyl chloride), polystyrene, polyesters, polyanhydrides, polyacrylonitrile, polysulfones, polyacrylic ester, acrylic, polyurethane and polyacetal, or copolymers or mixtures thereof.

In certain embodiments, the channeling agent has a water vapor transmission rate of at least two times that of the base polymer. In other embodiments, the channeling agent has a water vapor transmission rate of at least five times that of the base polymer. In other embodiments, the channeling agent has a water vapor transmission rate of at least ten times that of the base polymer. In still other embodiments, the channeling agent has a water vapor transmission rate of at least twenty times that of the base polymer. In still another embodiment, the channeling agent has a water vapor transmission rate of at least fifty times that of the base polymer. In still other embodiments, the channeling agent has a water vapor transmission rate of at least one hundred times that of the base polymer.

As used herein, the term "channeling agent" or "channeling agents" is defined as a material that is immiscible with the base polymer and has an affinity to transport a gas phase substance at a faster rate than the base polymer. A channeling agent is capable of forming channels through the entrained polymer when formed by mixing the channeling agent with the base polymer. Optionally, such channels are capable of transmitting a selected material through the entrained polymer at a faster rate than in solely the base polymer.

As used herein, the term "channels" or "interconnecting channels" is defined as passages formed of the channeling agent that penetrate through the base polymer and may be interconnected with each other.

As used herein, the term "entrained polymer" is defined as a monolithic material formed of at least a base polymer with an active agent and a channeling agent entrained or distributed throughout.

As used herein, the term "monolithic," "monolithic structure" or "monolithic composition" is defined as a composition or material that does not consist of two or more discrete macroscopic layers or portions. Accordingly, a "monolithic composition" does not include a multilayer composite.

As used herein, the term "selected material" is defined as a material that is acted upon, by, or interacts or reacts with an active agent and is capable of being transmitted through the channels of an entrained polymer. For example, in embodiments in which a releasing material is the active agent, the selected material may be moisture that reacts with or otherwise triggers the active agent to release a releasing material, such as an antimicrobial gas.

Furthermore, the terms "package," "packaging" and "container" may be used interchangeably herein to indicate an object that holds or contains a good, e.g., food product and foodstuffs. A package includes a container with a product stored therein. Examples of a package, packaging and container include a tray, box, carton, bottle receptacle, vessel, pouch and flexible bag. A pouch or flexible bag may be made from, e.g., polypropylene or polyethylene. The package or container may be closed, covered and/or sealed using a variety of mechanisms including a cover, a lid, lidding sealant, an adhesive and a heat seal, for example. The package or container is composed or constructed of various materials, such as plastic (e.g., polypropylene or polyethylene), paper, Styrofoam, glass, metal and combinations thereof. In one optional embodiment, the package or container is composed of a rigid or semi-rigid polymer, optionally polypropylene or polyethylene, and preferably has sufficient rigidity to retain its shape under gravity.

### Exemplary Entrained Polymers

Conventionally, desiccants, oxygen absorbers and other active agents have been used in raw form, e.g., as loose particulates housed in sachets or canisters within packaging, to control the internal environment of the package. For many applications, it is not desired to have such loosely stored active substances. Thus, the present application provides active entrained polymers comprising active agents, wherein such polymers can be extruded and/or molded into a variety of desired forms, e.g., container liners, plugs, film sheets, pellets and other such structures. Such active entrained polymers include channeling agents, such as polyethylene glycol (PEG), which form channels between the surface of the entrained polymer and its interior to transmit a selected material (e.g., moisture) to the entrained active agent. Entrained polymers are described, for example, in U.S. Pat. Nos. 5,911,937, 6,080,350, 6,124,006, 6,130,263, 6,194,079, 6,214,255, 6,486,231, 7,005,459, and U.S. Pat. Pub. No. 2016/0039955.

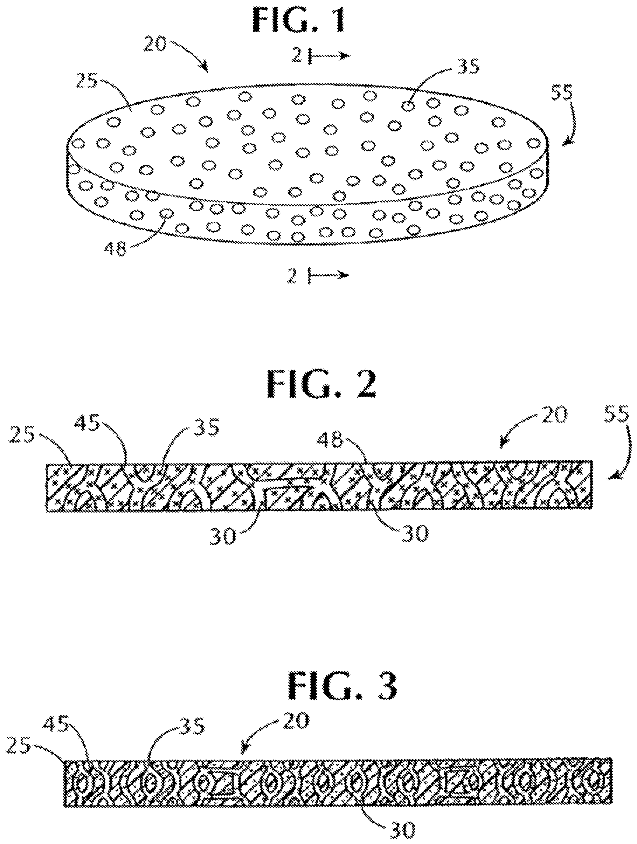

Figs. 1-6 illustrate exemplary entrained polymers 20 and various packaging assemblies formed of entrained polymers according to certain embodiments of the invention. The entrained polymers 20 each include a base polymer 25, a channeling agent 35 and an active agent 30. As shown, the channeling agent 35 forms interconnecting channels 45 through the entrained polymer 20. At least some of the active agent 30 is contained within these channels 45, such that the channels 45 communicate between the active agent 30 and the exterior of the entrained polymer 20 via channel openings 48 formed at outer surfaces of the entrained polymer 25. The active agent 30 is any one of a variety of releasing materials as described in further detail below.

Suitable channeling agents include polyglycol such as polyethylene glycol (PEG), ethylene-vinyl alcohol (EVOH), polyvinyl alcohol (PVOH), glycerin polyamine, polyurethane and polycarboxylic acid including polyacrylic acid or polymethacrylic acid. Alternatively, the channeling agent 35 can be a propylene oxide polymerisate-monobutyl ether, which is commercially available under the trade name Polyglykol B01/240, produced by CLARIANT. In other embodiments, the channeling agent could be a propylene oxide polymerisate monobutyl ether, which is commercially available under the trade name Polyglykol B01/20, produced by CLARIANT, propylene oxide polymerisate, which is commercially available under the trade name Polyglykol D01/240, produced by CLARIANT, ethylene vinyl acetate, nylon 6, nylon 66, or any combination of the foregoing.

Entrained polymers with antimicrobial releasing agents are further described below.

### Antimicrobial Releasing Agents and Optional Entrained Polymer Formulations Incorporating the Same

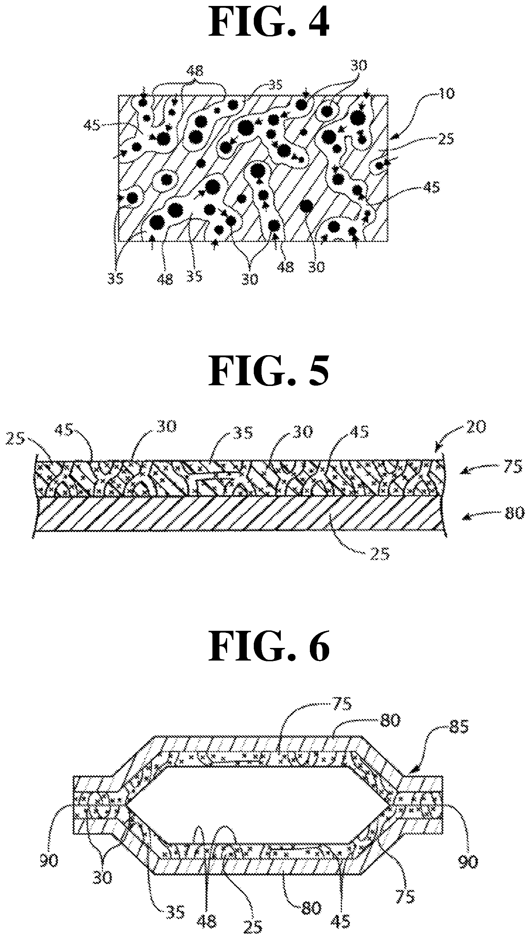

Suitable active agents according to the invention are antimicrobial releasing agents. FIG. 4 illustrates an embodiment of an entrained polymer 10 according to the invention, in which the active agent 30 is an antimicrobial releasing agent. The arrows indicate the path of a selected material, for example moisture or another gas, from an exterior of the entrained polymer 10, through the channels 45, to the particles of active agent 30 (in this case, an antimicrobial releasing agent). The antimicrobial releasing agent reacts with the selected material, which in the context of the present invention is moisture, and in response releases a released antimicrobial material, preferably in gas form.

The antimicrobial agents useful herein are volatile antimicrobial releasing agents

The term "volatile antimicrobial releasing agent" refers to a compound that when it comes into contact with a fluid (e.g., water or the juice from a food product), produces a gas and/or gas phase such as vapor of released antimicrobial agent. As will be discussed in greater detail below, the volatile antimicrobial releasing agent is generally used in a closed system so that the released antimicrobial material (gas and/or vapor) does not escape. The volatile antimicrobial releasing agents in the context of the present invention are chlorine dioxide-releasing agents (e.g., a combination of sodium chlorite, a catalyst and a trigger).

Preferred features of antimicrobial releasing agents used according to the present invention include any one or more of the following characteristics: (1) they volatize at refrigerated temperatures; (2) they are food safe and edible in finished form; (3) they may be incorporated safely into an entrained polymer formulation or other mechanism for release; (4) they are shelf stable in long term storage conditions; (5) they release the released antimicrobial material only once a package in which the agent is disposed, is sealed with product disposed in the package; (6) they do not affect a stored food product organoleptically when they are formulated and configured to achieve a desired release profile within the package; and (7) they are preferably acceptable under applicable governmental regulations and/or guidelines pertaining to food packaging and finished food labeling.

### Chlorine Dioxide Releasing Antimicrobial Releasing Agents

The antimicrobial releasing agents are volatile antimicrobial agents that release chlorine dioxide (ClO₂) in gas form as the released antimicrobial material. For example, the antimicrobial releasing agent may be a compound or formulation comprising an alkaline chlorite, such as, e.g. sodium chlorite or potassium chlorite, a catalyst and a trigger (e.g., in the form of a powder) which in combination are triggered or activated by moisture to cause the agent to release chlorine dioxide. One exemplary antimicrobial releasing agent is provided under the brand ASEPTROL 7.05 by BASF Catalysts LLC. This material and preparation of the same is described in U.S. Pat. No. 6,676,850. Example 6 of the aforementioned patent describes a formulation that is particularly suitable as an antimicrobial releasing agent.

Optionally, a suitable antimicrobial releasing agent, which is based on Example 6 of U.S. Pat. No. 6,676,850 and is configured to release chlorine dioxide gas upon activation by moisture, may be prepared as follows.

The antimicrobial releasing agent includes a formulation comprising sodium chlorite (as the active component), a base catalyst and a trigger. The catalyst and trigger preparations are made separately, then combined together and ultimately combined with the sodium chlorite.

The base catalyst is optionally made by first preparing a 25-30 wt. % sodium silicate solution (SiO₂:Na₂O proportion of 2.0 to 3.3 by weight). That solution is mixed into an aqueous slurry of 28-44 wt. % Georgia Kaolin Clay (particle size diameter of about 80% less than one micrometer), wherein the sodium silicate solution is 2 wt. % of the slurry. The slurry is oven dried at 100° C to generate agglomerates or microspheres of about 70µm in size. 300g of these microspheres are impregnated with 280g of 2.16N sulfuric acid solution. That mixture is then dried at 100°C. Next, the dried mixture undergoes a calcine process at 350°C for 3 hours, followed by an additional calcine process at 300°C in a sealed glass jar with the seal wrapped with tape. This mixture forms the base catalyst.

Next, 84.6 g of the base catalyst are mixed with 10.1 g of the trigger, dry calcium chloride. This base catalyst and trigger mixture is ground with mortar and pestle at ambient room temperature. This mixture is dried for 2 hours at 200°C. The base catalyst and trigger mixture is then cooled to room temperature in a sealed glass jar with tape wrapped around the seal.

Finally, the base catalyst and trigger mixture is combined with 5.3 g of sodium chlorite (which is the active component of the active agent). The full mixture is then ground with mortar and pestle at ambient room temperature, thus forming an optional embodiment of an antimicrobial releasing agent. The antimicrobial releasing agent is then deposited in a sealed glass jar with tape wrapped around the seal to preserve it and keep it essentially free of moisture, which would prematurely activate it (to release chlorine dioxide gas).

The antimicrobial releasing agent is a component of an entrained polymer comprising the active agent (e.g., 40%-70% by weight), a base polymer and a channeling agent. Optionally, such entrained polymer is in the form of a film disposed within sealed packaging containing fresh foodstuffs, e.g., meat or produce.

It is generally believed that the higher the antimicrobial releasing agent concentration in an entrained polymer mixture, the greater the releasing capacity of the final composition. However, too high an active agent concentration may cause the entrained polymer to be too brittle. This may also cause the molten mixture of active agent, base polymer and channeling agent to be more difficult to either thermally form, extrude or injection mold. In one embodiment, the antimicrobial releasing agent loading level or concentration can range from 10% to 80%, preferably 40% to 70%, more preferably from 40% to 60%, and even more preferably from 45% to 55% by weight with respect to the total weight of the entrained polymer. Optionally, the channeling agent may be provided in a range of 2% to 10% by weight, preferably about 5% by weight. Optionally, the base polymer may range from 10% to 50% by weight of the total composition, preferably from 20% to 35% by weight. Optionally, a colorant is added, e.g., at about 2% by weight of the total composition.

In one embodiment, an entrained polymer may be a formulation including 50% by weight of ASEPTROL 7.05 antimicrobial releasing agent in the form of the powdered mixture, 38% by weight ethyl vinyl acetate (EVA) as a base polymer and 12% by weight polyethylene glycol (PEG) as a channeling agent.

FIG. 1 shows a plug 55 constructed of an entrained polymer 20, in accordance with certain embodiments of the invention. The plug 55 may be placed inside of a container. As aforementioned, the entrained polymer 20 includes a base polymer 25, a channeling agent 35 and an active agent 30.

FIG. 2 shows a cross-sectional view of the plug 55 shown in FIG. 1. In addition, FIG. 2 shows that the entrained polymer 20 has been solidified such that the channeling agent 35 forms interconnecting channels 45 to establish passages throughout the solidified plug 55. At least some of the active agent 30 is contained within the channels 45, such that the channels 45 communicate between the active agent 30 and the exterior of the entrained polymer 20 via channel openings 48 formed at outer surfaces of the entrained polymer 25.

FIG. 3 illustrates an embodiment of a plug 55 having similar construction and makeup to the plug 55 of FIG. 2, where interconnecting channels 45 are finer as compared to those shown in FIG. 2. This can result from the use of a dimer agent (i.e., a plasticizer) together with a channeling agent 35. The dimer agent may enhance the compatibility between the base polymer 25 and the channeling agent 35. This enhanced compatibility is facilitated by a lower viscosity of the blend, which may promote a more thorough blending of the base polymer 25 and channeling agent 35, which under normal conditions can resist combination into a uniform solution. Upon solidification of the entrained polymer 20 having a dimer agent added thereto, the interconnecting channels 45 which are formed therethrough have a greater dispersion and a smaller porosity, thereby establishing a greater density of interconnecting channels throughout the plug 55.

Interconnecting channels 45, such as those disclosed herein, facilitate transmission of a desired material, such as moisture, gas or odor, through the base polymer 25, which generally acts as a barrier to resist permeation of these materials. For this reason, the base polymer 25 itself acts as a barrier substance within which an active agent 30 maybe entrained. The interconnecting channels 45 formed of the channeling agent 35 provide pathways for the desired material to move through the entrained polymer 10. Without these interconnecting channels 45, it is believed that relatively small quantities of the desired material would be transmitted through the base polymer 25 to or from the active agent 30. Additionally, wherein the desired material is transmitted from the active agent 30, it may be released from the active agent 30, because the active agent 30 is an antimicrobial gas releasing material.

FIG. 5 illustrates an active sheet or film 75 formed of the entrained polymer 20 used in combination with a barrier sheet 80 to form a composite, according to an embodiment of the invention. The characteristics of the active sheet 75 are similar to those described with respect to the plug 55 shown in FIGs. 1 and 2. The barrier sheet 80 may be a substrate such as foil and/or a polymer (such as a container wall) with low moisture or oxygen permeability. The barrier sheet 80 is compatible with the active sheet 75 and thus, is configured to thermally bond to the active sheet 75, when the active sheet 75 solidifies after dispensing. FIG. 6 illustrates an embodiment in which the two sheets 75, 80 are combined to form a packaging wrap having active characteristics at an interior surface formed by the entrained polymer 20/active sheet 75, and vapor resistant characteristics at an exterior surface formed by the barrier sheet 80.

In one embodiment, the sheets 75, 80 of FIG. 5 are joined together to form an active package 85, as shown in FIG. 6. As shown, two laminates or composites are provided, each formed of an active sheet 75 joined with a barrier sheet 80. The sheet laminates are stacked, with each active sheet 75 facing the other, so as to be disposed on an interior of the package, and are joined at a sealing region 90, formed about a perimeter of the sealed region of the package interior.

Optionally, in any of the foregoing embodiments, the antimicrobial entrained polymer is in the form of a film that is disposed within a sealed food package. Optionally, the film may be adhered, e.g., using an adhesive, to an inner surface of the package. Alternatively, the film may be heat staked (without an adhesive) to the inner surface of the package. The process of heat staking film onto a substrate is known in the art and described in detail in U.S. Pat. No. 8,142,603. The size and thickness of the film can vary. In certain embodiments, the film has a thickness of approximately 0.3 mm. Optionally, the film may range from 0.1 mm to 1.0 mm, more preferably from 0.3 mm to 0.6 mm.

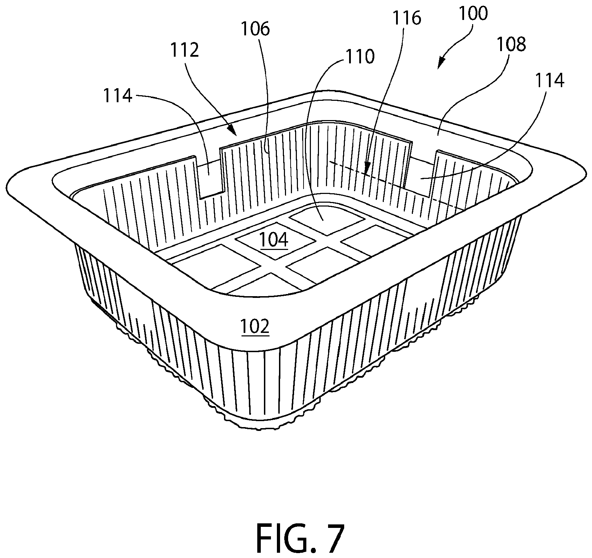

FIG. 7 shows a package 100 for storing fresh foodstuffs, e.g., produce or meat, in accordance with certain embodiments of the invention. The package 100 is shown in the form of a plastic tray 102. Although, other forms and materials are also contemplated as being within the scope of the invention. The tray 102 comprises a base 104, and sidewalls 106 extending vertically from the base 104 leading to a tray opening 108. The base 104 and sidewalls 106 together define an interior 110, e.g. for holding and storing fresh produce. The package 100 also includes a flexible plastic lidding film 112, which is disposed over and seals the opening 108. It is contemplated and understood that a wide variety of covers or lids may be used to close and seal the opening 108. Optionally, the cover or lid is transparent, such that the interior can be viewed. When a product (e.g., sliced tomatoes) is stored within the interior 110, empty space surrounding and above the product is herein referred to as "headspace" (not shown).

The package 100 further includes sections of antimicrobial entrained polymer film 114 disposed on the sidewalls 106. In the embodiment shown, there are four sections of such film 114, one section of film 114 per sidewall 106. The film 114 is preferably disposed at or near the top of the sidewall 106, proximal to the opening 108. At least a portion, although preferably most or all of each of the film sections 114 protrude above the midline 116 of the sidewall 106, the midline 116 being centrally located between the base 104 and the opening 108. It has been found that film placement at or towards the top of the package 100 has an effect on efficacy of the film sections 114, as such placement facilitates desirable distribution of released antimicrobial material into the headspace of the package 100. Placing the entrained polymer at too low of a height above the base 104, or beneath the food in the package, has been found not to provide desirable distribution of the released antimicrobial material in the headspace. If placement mass transfer of the antimicrobial is not optimal, some of the food product/good will not be adequately protected against the growth of microbes. Additionally, the food may undesirably react with and/or absorb the released antimicrobial material. As explained further below, it has been found that placing the film above the midline of the sidewall, preferably at a height of at least 67% or 75% or 80% of the sidewall, facilitates achieving a desired antimicrobial gas release profile and headspace concentration.

Optionally, the entrained polymer film 114 is heat staked to the package (e.g., on the sidewall as described and shown vis-à-vis Fig. 7). Advantageously, heat staking could allow the film to permanently adhere to the sidewall without use of an adhesive. An adhesive may be problematic in some circumstances because it may release unwanted volatiles in the food- containing headspace. Aspects of a heat staking process that may be used are disclosed in U.S. Pat. No. 8,142,603, as referenced above. Heat staking, in this instance, refers to heating a sealing layer substrate on the sidewall while exerting sufficient pressure on the film and sealing layer substrate to adhere the film to the container wall.

In certain embodiments, the antimicrobial entrained polymer film 114 may be connected to the surface of the lidding film 112 (or a lid) that is inside of the container, in place of the film sections 114 on the sidewall(s) 106, or in addition thereto. Alternatively, the antimicrobial entrained polymer film 114 may be incorporated into the composition of the lidding film 112 (or a lid).

In addition to placement of the film 114, another important factor is the release profile of the released antimicrobial material. As aforementioned, to ensure adequate shelf life, release of the agent must not all occur immediately; rather, release should be extended, sustained and predetermined to attain a desired shelf life.

In general, the polymer entrained with antimicrobial releasing agent is self-activating, meaning that release of the released antimicrobial gas is not initiated until the antimicrobial releasing agent is exposed to the selected material, i.e., moisture. Typically, moisture is not present in the interior, e.g., headspace, of the container prior to a food product being placed inside of the container. Upon placement, the food product generates moisture that interacts with the antimicrobial releasing agent entrained in the polymer, to generate the antimicrobial releasing agent in the headspace. In one embodiment, the container is sealed in a moisture tight manner to trap moisture within the container generated by moisture-exuding comestibles.

In certain embodiments, a controlled release and/or a desired release profile can be achieved by applying a coating to the active agent, e.g., using a spray coater, wherein the coating is configured to release the released antimicrobial agent within a desired time frame. The antimicrobial releasing agents may have different coatings applied thereon to achieve different release effects. For example, if a 14-day shelf life is desired, based on predetermined relative humidity of the package, the amount of selected material (moisture) present to trigger the antimicrobial releasing agent may be determined. Based on this determination, the agent may be coated with extended release coatings of varying thicknesses and/or properties to achieve the desired release profile. For example, some active agent will be coated such that it will not begin releasing released antimicrobial material until after one week, while other active agent will begin release almost immediately. Spray coating technology is known in the art. For example, pharmaceutical beads and the like are spray coated to control the release rate of active ingredient, e.g., to create extended or sustained release drugs. Optionally, such technology may be adapted to apply coatings to the active agent to achieve a desired controlled rate of release of antimicrobial gas.

Alternatively, a controlled release and/or desired release profile may be achieved by providing a layer, optionally on both sides of the film, of a material configured to control moisture uptake into the entrained polymer (which in turn triggers release of the released antimicrobial material). For example, the film may include a polymer liner, made e.g., from low density polyethylene (LDPE) disposed on either side or both sides thereof. The thickness of the film and liner(s) can vary. In certain embodiments, the film is approximately 0.3 mm thick and the LDPE liners on either side are each approximately 0.02 mm to 0.04 mm thick. The LDPE liners may be coextruded with the film or laminated thereon.

Alternatively, a controlled release and/or desired release profile may be achieved by modifying the formulation of the trigger of the antimicrobial releasing agent. For example, the trigger, when contacted by moisture, liquefies and then reacts with the active component (e.g., sodium chlorite) to cause release of the antimicrobial gas. The trigger may be formulated to liquefy upon contact with moisture at different rates. The faster the trigger liquefies, the faster the release of antimicrobial gas and vice versa. In this way, modification of the trigger is yet another vehicle provide a desired release rate of antimicrobial gas.

Any combination of the aforementioned mechanisms may be utilized to achieve desired release rates and release profiles of antimicrobial gas within a container headspace.

### Varied Release Rates Depending on Nature of Stored Food Product

The inventors have discovered that the desired release profile of chlorine dioxide gas in a container headspace may vary depending on the nature of the product that is stored. For example, the inventors have found that foods having a high water content appear to require a high burst of antimicrobial gas followed by a drop in headspace concentration during the storage period while foods having a more modest water content appear to respond well to a relatively steady headspace concentration over the storage period.

Examples of food products that exude high amounts of moisture and that are more appropriately protected by a release profile having a quick burst of chlorine dioxide gas followed by a drop include sliced, diced or cut foods selected from the group consisting of: tomatoes, washed peppers, washed onions, water melon, honey dew, cantaloupe, strawberries, peaches, pineapple, oranges, seafood, meat and poultry. For such foods, an amount of the antimicrobial releasing agent is provided that releases the chlorine dioxide gas to preferably provide a headspace concentration of from 10 parts per million (PPM) to 35 PPM for a period of 16 hours to 36 hours, optionally from 15 PPM to 30 PPM for a period of 16 hours to 36 hours, optionally from 15 PPM to 30 PPM for a period of about 24 hours. Headspace concentration measurements may be obtained, for example, using a PORTASENS II gas detector from Analytical Technology, Inc. for readings taken with chlorine dioxide sensors placed within the package. The sensors may be one or more of 00-1004 Chlorine Dioxide, 0-1/5 PPM (2 PPM Std.), 00-1005 Chlorine Dioxide, 0-5/200 (20 PPM Std.) and 00-1359 Chlorine Dioxide, 0- 200/1000 PPM (1000 PPM Std.), which are also from Analytical Technology, Inc. and are compatible with the PORTASENS II gas detector.

This type of "quick burst" (headspace concentration of from 10 parts per million (PPM) to 35 PPM for a period of 16 hours to 36 hours) appears to be required so that the chlorine dioxide gas, which dissolves in water, can stay ahead of the dissolution curve to provide sufficient antimicrobial effect during the spike in headspace concentration, to improve the shelf life of contaminated food over an approximately two-week period. Notwithstanding the characterization of the release as "quick burst," it may still be considered controlled release because headspace concentration is still regulated to fall within a desired concentration over a given period, even if relatively "quick." The inventors have found, for example, that the aforementioned headspace concentrations work well to significantly reduce the microbial count of contaminated sliced tomatoes over about thirteen days without bleaching the tomatoes. This is borne out by examples provided below.

Examples of food products that exude moderate or low amounts of moisture are whole or minimally processed produce selected from the group consisting of: broccoli, brussel sprouts, cabbage, cucumbers, bananas, herbs, whole peppers, carrots, root vegetables and potatoes. For such foods, an amount of antimicrobial releasing agent releases the chlorine dioxide gas to preferably provide a headspace concentration of from 8 PPM to 15 PPM for a period of 13 days. Regardless of whether this exact headspace concentration is met, it is preferred that the antimicrobial releasing agents are provided in entrained polymer films, as described herein, for such low or moderate moisture exuding foods.

The aforementioned release profiles and headspace concentration assume the presence of moisture exuding food product in the package.

In either case (high moisture exuding or moderate/low moisture exuding foods), where the product is contaminated by at least one type of pathogen, the chlorine dioxide gas is provided in a headspace concentration over a determined time period to effectuate, after a span of 13 days from when the product is provided within the interior space and under storage conditions of 7°C, at least a 2 log base 10 reduction in colony forming units per gram (CFU/g), optionally at least a 3 log base 10 reduction in CFU/g, optionally at least a 4 log base 10 reduction in CFU/g of the at least one type of pathogen, without causing organoleptic degradation of the food product. Such organoleptic degradation may include bleaching or other discoloration of the food product.

Optionally, according to any embodiment, 700-950 mg of the antimicrobial releasing agent is effective when used in a 1L container having 1.25 lbs of tomatoes stored therein. It is contemplated that proportional adjustment of the mass of antimicrobial releasing agent may be done according to changes in container volume and amount/type of contents.

### Applications of Invention for Non-Edible Goods

In another aspect, the invention is directed to use of entrained polymers comprising antimicrobial agents for use outside of food preservation applications. For example, the solutions disclosed herein may be adapted for use in sterilization of disposable medical devices, i.e., to reduce the bioburden of such devices when they are packaged. The primary difference between preservation of fresh food and medical devices is shelf life. Preservation of fresh food implicates a shelf life measured in days or weeks while maintaining sterility of packaged medical devices requires a shelf life measured in months or years. Accordingly, the release profile over time for one application versus the other will necessarily vary.

The invention will be illustrated in more detail with reference to the following Examples.

### EXAMPLES

### Example 1 - Controlling Release of ClO₂ Gas

A storage temperature of 7°C was chosen to replicate a storage temperature that is slightly elevated above ideal storage temperature (or to stimulate an inadvertent spike in temperature during storage, e.g., when refrigeration equipment breaks down for a few hours). Three packages similar to that shown in FIG. 7 were utilized in this experiment. All three included antimicrobial entrained polymer film sections placed substantially as shown in FIG. 7. The film was an entrained polymer film including an antimicrobial releasing agent in the form of a powdered mixture comprising sodium chlorite (which produces chlorine dioxide gas), sulfuric acid clay (as a catalyst) and calcium chloride (as a humidity trigger). This powdered mixture is sold commercially by BASF under the name ASEPTROL and is described above.

The formulation for the film itself was a formulation including 50% by weight of the aforementioned antimicrobial releasing agent in the form of the powdered mixture, 38% by weight ethyl vinyl acetate (EVA) as a base polymer and 12% by weight polyethylene glycol (PEG) as a channeling agent. This film formulation is described herein as X2597 and is considered one exemplary entrained polymer. As described above, the antimicrobial releasing agent is triggered by moisture to release chlorine dioxide (ClO₂) gas as the released antimicrobial material. The film, as between the three packages, was the same formulation and dimensions. However, two of the films had external layers to control moisture uptake and one had no such layers. The film in Package A was sandwiched between coextruded layers of LDPE that were about 0.02 mm thick. The film in Package B was sandwiched between coextruded layers of LDPE that were about 0.04 mm thick. The film in Package C (the control) had no such polymer layers on either side of the film.

The ClO₂ levels in the packages were measured for 13 days with detection sensors calibrated for the desired concentration known to have an antimicrobial effect on most organisms. Results were as follows (values presented in ppm concentration of ClO₂).

| **Day** | **Package A** | **Package B** | **Package C** |
|---|---|---|---|
| 1 | 24 | 17 | 34 |
| 2 | 27 | 22 | 43 |
| 3 | 28 | 21 | 29 |
| 4 | 27 | 21 | 27 |
| 5 | 28 | 20 | 26 |
| 6 | 29 | 20 | 25 |
| 7 | 26 | 21 | 18 |
| 8 | 21 | 21 | 12 |
| 9 | 17 | 19 | 9 |
| 10 | 13 | 17 | 4 |
| 11 | 11 | 16 | 4 |
| 12 | 8 | 13 | 4 |
| 13 | 6 | 11 | 4 |

This Example demonstrates that Package B had the steadiest and most consistent release profile, attributable to the thicker polymer liner sandwiching the antimicrobial film, which controlled moisture uptake into the film. The release profile of Package B may be desirable for certain applications, for example, where the food product exudes a relatively modest amount of moisture, such as broccoli.

### Example 2 - Geotrichum Growth Testing

A common cause of rejects for quality of tomatoes is Geotrichum candidum, a yeast-like mold that grows as a white fuzz. In this example, sliced tomatoes deliberately tainted with G. *candidum* were packaged and subjected to testing. A storage temperature of 7°C was chosen to replicate a storage temperature that is slightly elevated above ideal storage temperature (or to stimulate an inadvertent spike in temperature during storage, e.g., when refrigeration equipment breaks down for a few hours).

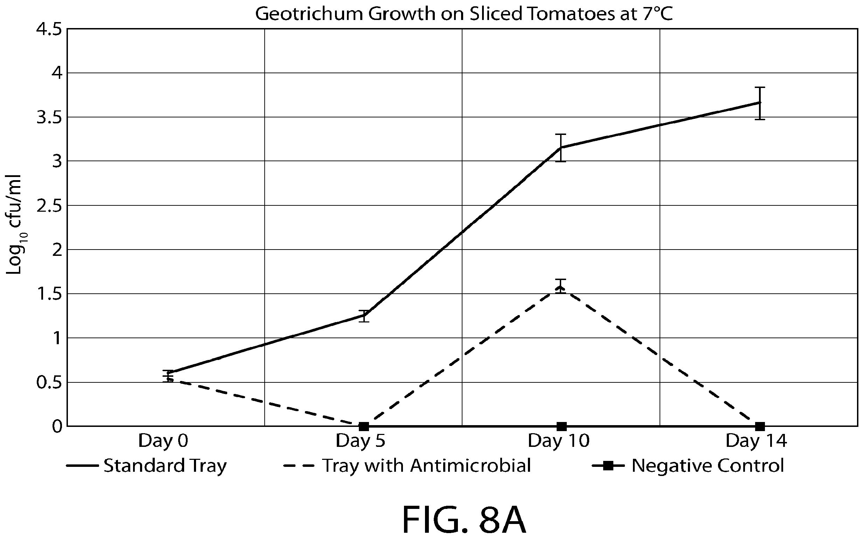

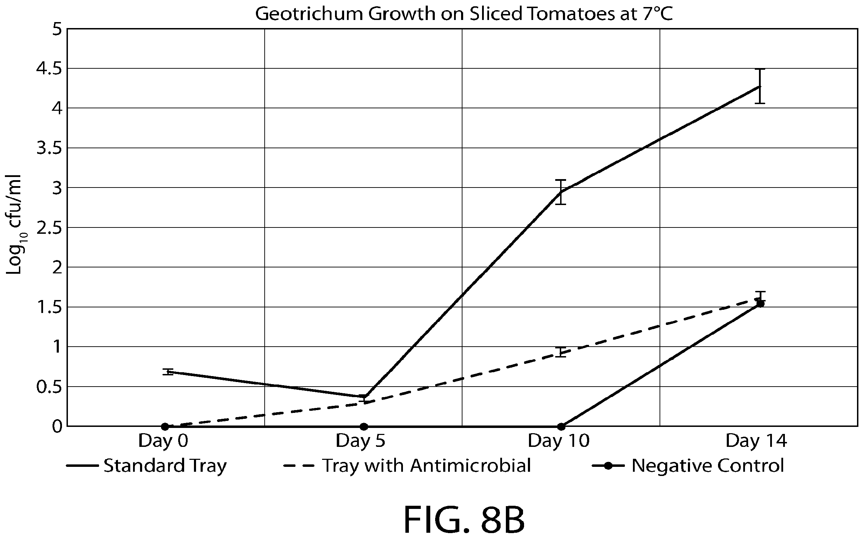

A package similar to that shown in FIG. 7, with the ClO₂-releasing antimicrobial film placed towards the top of the package, was used to store the contaminated sliced tomatoes. A second package, otherwise identical to the first except without the antimicrobial film, was used to store the contaminated sliced tomatoes. The results are provided on the graphs shown in FIGS. 8A and 8B. The results show conclusively that the antimicrobial film significantly inhibited growth of Geotrichum on the sliced tomatoes compared to the package without the film. In the package without the antimicrobial film, proliferation of Geotrichum on the sliced tomatoes was readily apparent to the naked eye. By contrast, the sliced tomatoes in the package with the entrained polymer ClO₂-releasing antimicrobial film appeared fresh, with no visible signs of Geotrichum growth. This is further notable given the suboptimal 7°C storage conditions for the 14-day test.

It should be understood that examples on tomatoes were merely exemplary and that other produce and fresh foods (e.g., meat) may be used in accordance with the invention.

### Example 3 - Antimicrobial Film Location Testing

Entrained polymer film (X2597 film, described above) was placed in the headspace of a tray at various height positions on the sidewalls to test the effectiveness of various antimicrobial film locations/positions, as well as various sampling locations. The abbreviation "MCT" as used herein refers to Maxwell Chase Technologies, LLC of Atlanta, GA. The abbreviation "FPT" refers to FRESH-R-PAX® trays of Maxwell Chase Technologies, LLC.

The following materials were used in this example:

| |
|---|
| 16 - 1g X2597 Film Strips Lot #02116A030A (CSP Technologies -Auburn, AL). |
| 66 Tomatoes (5x5 red tomatoes purchased from grocery store the day of the experiment). |
| 24 MCT FPT 125D Trays (Maxwell Chase Technologies - Atlanta, GA) having a bottom surface and an opposite opening, with four sidewalls extending vertically from the bottom surface. The sidewalls had a length of 10" and height of 3 5"8 (measured from the bottom surface). |
| 24 plastic holders (Made from cut MCT FPT125D trays.) |
| Polypropylene (PP) lidding film approx. 50-gauge oriented polypropylene cast/ 1 mil. Cast Polypropylene (0.00152" thick) app. 90cc/100in²/day OTR , 0.8gm/100in²/day WVTR (MCT - Atlanta, GA) |
| MCT-MTS Manual Tray Sealer at 375°F (MCT Atlanta, Ga). |
| SABER Tomato Hand-Slicer 7/32" slices (Prince Castle, Carol Stream, IL). |
| ATI C16 Portable Gas Analyzer (Analytical Technology Inc. Collegeville, PA). |
| ClO₂ Sensor #00-1425 1/5 (ATI Collegeville, PA). |
| ClO₂ Sensor #00-1004 1/5. |
| ClO₂ Sensor #00-1005 5/200. |
| ClO₂ Sensor #00-1359 200/2000. |
| Tempure Scientific Top Mount Laboratory Refrigerator (Model #LP-75-HG-TP) equipped with a Dixell XR40CX computer control set at 7C temperature with high of 8°C and low of 6°C cooling setting. |
| 2 Sets of CPC #3438400 Quick-Disconnect Valves with compression fittings per mason jar (McMaster-Carr (MCM) #5012K122). |
| Flex® GP 70 3/16" ID, ¼" OD black PVC tubing (MCM #5231K35). |
| 011 Buna-N O-ring, oil resistant, round profile (MCM #9408K41). |
| Xacto Knife. |

The MCT FPT125D (1/4 steam size, deep white polypropylene) trays were modified as follows. Three holes approximately 8.5 mm wide and 2 cm apart were made into the MCT FPT125D trays with an Xacto knife. Edges of the hole were cleaned and the CPC valves were screwed into the holes with an o-ring on both sides, and the compression fitting tightening down the 2 rings. Both valves were placed with QDV on the outside of the lid and container to allow for the automatic closing valves to be on the outside for sampling purposes.

Flex® GP 70 3/16" ID, ¼" OD black PVC tubing(MCM#5231K35) was used on both intake and outtake ports of the C16 Portable Gas Analyzer, as well as the other end of the CPC #3438400 Quick-Disconnect Valves with compression fittings to connect to the trays to sample the headspace in the trays.

CSP film samples were cut from the same strip of film and same width. Then, each sample was weighed to 1.000 g and connected to a sidewall of the tray with a plastic piece to hold it in place. There were two samples in each tray, which resulted in 2 g of CSP film per tray. Each of the samples was connected to a different sidewall of the tray.

The tomatoes were sliced using the hand-slicer with the calyx facing down. The ends were discarded. About 7 slices of tomatoes were placed on the bottom surface of each tray.

The manual sealer was heated to 375°F, and each tray with tomatoes therein was placed on the respective sealing plate. Lidding/Sealing film was placed over the tray, the sealing handle was pressed down and held for approximately 1-2 seconds to cover/seal the tomatoes inside the tray.

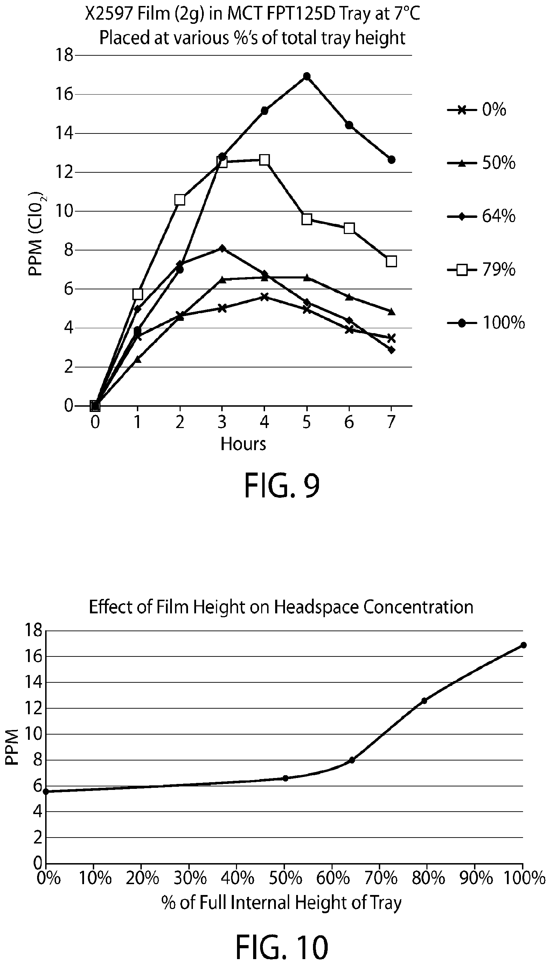

For each of the trays, the ClO₂ release rate was measured in one-hour intervals over an 11-hour period. FIG. 9 shows the release of ClO₂ (ppm) corresponding to various positions of the CSP film in the tray, i.e., at 0%, 50%, 64%, 79% and 100% height from the bottom surface based on total height of the sidewall. These respective heights are measured from the midline of the film. FIG. 10 shows the effect of the CSP film height on headspace concentration.

The results indicate that varying the height of the CSP film in the tray has an effect on the presence of ClO₂ in the headspace. From the bottom of the tray (0%) to the mid-point (50% - approximately 2 inches up the sidewall in this particular example), there was only a small, e.g., insignificant change in headspace concentration. However, from the mid-point to the top of the tray, the increase in height resulted in a significant increase in concentration. The concentration doubled from a position at 64% of the total height to the top of the tray (100%). The data indicates that in order to maximize the headspace concentration of ClO₂ for optimum effectiveness and/or to minimize the amount of film required, the placement of the film should be preferably in the top 20% of the tray, i.e., positioned at a vertical height that is 80% to 100% of the total height of the sidewall measured from the bottom surface, and should be placed at least at 64% of the total height of the sidewall of the tray.

### Example 4 - Use of Quick Burst Release Profiles to Kill Pathogens

The effectiveness of reducing the level of *Listeria monocytogenes, E. coli,* and *Salmonella,* was evaluated for CSP ClO₂ film applied to an upper portion of a tray as compared to control trays absent of the CSP ClO₂ film.

CSP ClO₂ emitting films, designated formulation X2597 (described above), at 0.3 mm thickness were used. This formulation was designed to have a fast ClO₂ release profile and did not use an overlying polyethylene layer to reduce the moisture uptake rate into the film. As described above, the X-2597 film is a formulation including 50% by weight of antimicrobial releasing agent , 38% by weight ethyl vinyl acetate (EVA) as a base polymer and 12% by weight polyethylene glycol (PEG) as a channeling agent. Trays with either 4 grams or 3 grams of film per tray were used. The tomatoes in the tray were each inoculated with three pathogens, i.e., Listeria monocytogenes, E. Coli and Salmonella.

The following materials were used in this example.

| |
|---|
| 250 Tomatoes-category 5x5 (extra for waste) (5 cases 50/ cases) |
| Tomato hand-slicer (Prince Castle) |
| Manual sealer set at 375°F(Maxwell Chase Tech.) |
| Polypropylene lidding film Approx. 90 OTR (Maxwell Chase Tech) |
| *Listeria monocytogenes* 5 strain cocktail inoculums (Food Isolates) |
| *Salmonella* 5 strain cocktail (Food Isolates) |
| *E. coli* O157:H7 5 strain cocktail (Food Isolates) |
| Sterile Dilution water and tubes |
| Sterile forceps |
| Alcohol beaker and flame for sterilizing forceps |
| Sterile surgical knives |
| 10 FPT 125D Trays (1/4 steam sized white polypropylene trays) w/ 1g ClO₂ film on each upper corner |
| 10 FPT 125D Trays (1/4 steam sized white polypropylene trays) w/ 0.75g ClO₂ film on each upper corner |
| 10 FPT 125D Trays (1/4 steam sized white polypropylene trays) designated -MCT |
| 4 Un-inoculated Trays designated - UN |
| Refrigerator set at 7°C |
| 564 MOX Plates (60 day 0. 168 days 5, 8, 12) designated - List. |
| 564 XLD plates (60 day 0. 168 days 5, 8, 12) designated -Sal. |
| 564 PCA plates (60 day 0. 168 days 5,8, 12) designated - APC |
| 564 MAC plates (60 day 0. 168 days 5,8, 12) designated - E. coli |
| Enrichment broth for corresponding pathogens |
| Extra plates for streak verification |

*Salmonella, Listeria monocytogenes, and E. Coli* O157:H7 5 strain cocktails were prepared, mixed and kept overnight. The target was to achieve a 5-log inoculation of each pathogen on the tomatoes. The inoculated tomatoes had 10⁹ CFU pathogen/ml inoculum. Inoculations were plated for verification and initial levels.

A solution of 200 ppm free chlorine solution was prepared using lukewarm water. The slicer was immersed in the solution for 2 min, and then rinsed with tap water.

A 200-ppm free chlorine solution was prepared using warm water (approximately the same temperature as for the tomatoes). The tomatoes were placed in tap water first, then the chlorine solution for 2 minutes, and rinsed with tap water. The tomatoes were sliced using the hand-slicer with the calyx facing down. The ends were discarded such that there were 42 slices packed into each tray (6 tomatoes by 7 slices/tomato).

Eighteen (18) tomato slices within each tray were spot inoculated with the *Salmonella, Listeria monocytogenes, and E. Coli* (6 each) inoculums to achieve a triplicate analysis in each tray. The 18 tomato slices selected were identified by marking each slice with a Sharpie adjacent to the area to be inoculated. The inoculum was vortexed and 10 µl of inoculum was quickly withdrawn with a sterile pipette tip and micro pipetted onto the two slices marked at the top. This was repeated twice more per tray per pathogen.

The manual sealer was heated to 375°F. Each tray was placed on the sealing plate and the lidding film was pulled over the tray. The sealing handle was depressed and held in place for approximately 1-2 seconds. After sealing, each tray was checked to verify that the lidding film was fully attached to the tray.

The test trays were analyzed on days 0, 5, 8 and 12. For each tray, there were a total of three samples for each pathogen, three pathogens per tray and three APC (aerobic plate count) samples were taken from each tray. Each sample consisted of two slices taken using sterile forceps. The two slices were weighed into the sterile stomacher bag (weight was approximately 40-50 g) and three times the amount of sterile Peptone water was added. The tomatoes were stomached at 260 rpm for 1 minute. The necessary dilutions were then prepared (∼3) from the homogenate and duplicate spread plated onto the corresponding PCA, MOX, SMAC, or XLD plates.

Data was calculated as colony forming units (CFU) per gram. CFU values were converted to log values for data analysis. Data was averaged per tray and per sample type. The following is a summary of the tests that were conducted on respective days. The term "CSP3" refers to trays using 3g of X2597 film and the term "CSP4" refers to trays using 4g of X2597 film.

Day 0: 1 MCT tray inoculated w/ 3 Salmonella, 3 E. Coli, 3 Listeria and 3 APC tests/tray = 12 tests; 1 CSP4 tray inoculated w/ 3 Salmonella, 3 E. Coli, 3 Listeria and 3 APC tests/tray = 12 tests; 1 CSP3 tray inoculated w/ 3 Salmonella, 3 E. Coli, 3 Listeria and 3 APC tests/tray = 12 tests; 1 UN tray not inoculated (Negative Control) x 4 tests (sal, E.coli, Lm, APC)/tray = 4 tests. Cumulatively, this was a total of 40 tests.

Day 5: 3 MCT tray inoculated w/ 3 Salmonella, 3 E. Coli, 3 Listeria and 3 APC tests/tray = 36 tests; 3 CSP4 tray inoculated w/ 3 Salmonella, 3 E. Coli, 3 Listeria and 3 APC tests/tray = 36 tests; 3 CSP3 tray inoculated w/ 3 Salmonella, 3 E. Coli, 3 Listeria and 3 APC tests/tray = 36 tests; 1 UN tray not inoculated (Negative Control) x 4 tests (sal, E.coli, Lm, APC)/tray = 4 tests. Cumulatively, this was a total of 112 tests.

Day 8: 3 MCT tray inoculated w/ 3 Salmonella, 3 E. Coli, 3 Listeria and 3 APC tests/tray = 36 tests; 3 CSP4 tray inoculated w/ 3 Salmonella, 3 E. Coli, 3 Listeria and 3 APC tests/tray = 36 tests; 3 CSP3 tray inoculated w/ 3 Salmonella, 3 E. Coli, 3 Listeria and 3 APC tests/tray = 36 tests; 1 UN tray not inoculated (Negative Control) x 4 tests (sal, E.coli, Lm, APC)/tray = 4 tests. Cumulatively, this was a total of 112 tests.

Day 12: 3 MCT tray inoculated w/ 3 Salmonella, 3 E. Coli, 3 Listeria and 3 APC tests/tray = 36 tests; 3 CSP4 tray inoculated w/ 3 Salmonella, 3 E. Coli, 3 Listeria and 3 APC tests/tray = 36 tests; 3 CSP3 tray inoculated w/ 3 Salmonella, 3 E. Coli, 3 Listeria and 3 APC tests/tray = 36 tests; 1 UN tray not inoculated (Negative Control) x 4 tests (sal, E.coli, Lm, APC)/tray = 4 tests. Cumulatively, this was a total of 112 tests.

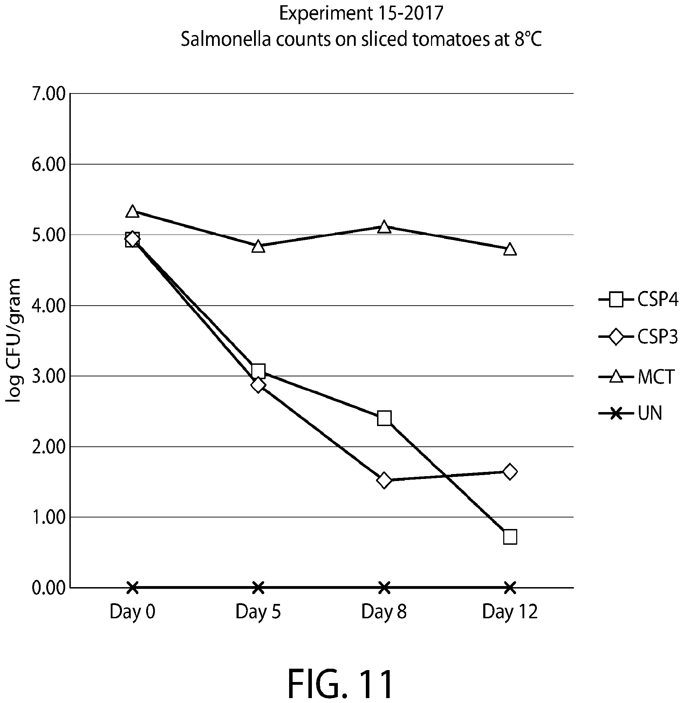

In all, this experiment cumulatively included a total of 376 tests (94 Salmonella, 94 E. Coli, 94 Listeria, 94 APC). Results are shown in FIGS. 11-13.

FIG. 11 shows that there was a decline in *Salmonella* after Day 0 and stayed in decline until day 12 for the CSP3 trays, and continued for the CSP4 trays. Each of these samples showed a reduction in *Salmonella* counts of at least 1.8 logs on day 5, 2.5 logs for day 8, and 3 logs for Day 12 respectively. This demonstrates a 99.9% reduction in *Salmonella* after 12 days in the CSP trays.

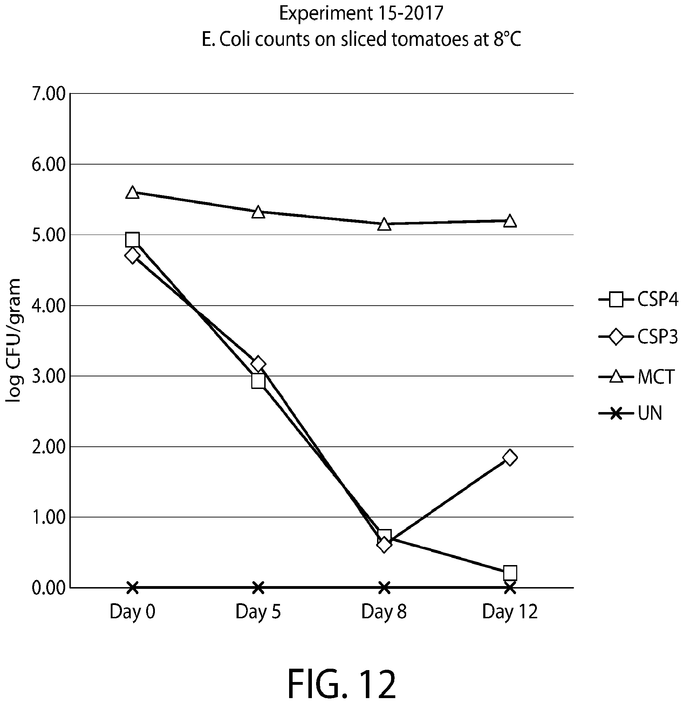

FIG. 12 shows results for E. *coli* that are similar to the *Salmonella* results. A decline in *E. coli* after Day 0 resulted in a reduction of at least 2 logs on day 5, 4 logs on day 8, and 3 logs on day 12. Similar to FIG. 11 for *Salmonella,* FIG. 12 shows an increase for the CSP3 tray on Day 12. It was determined that there was a 99.9% reduction in *E. coli* after a 12-day period.

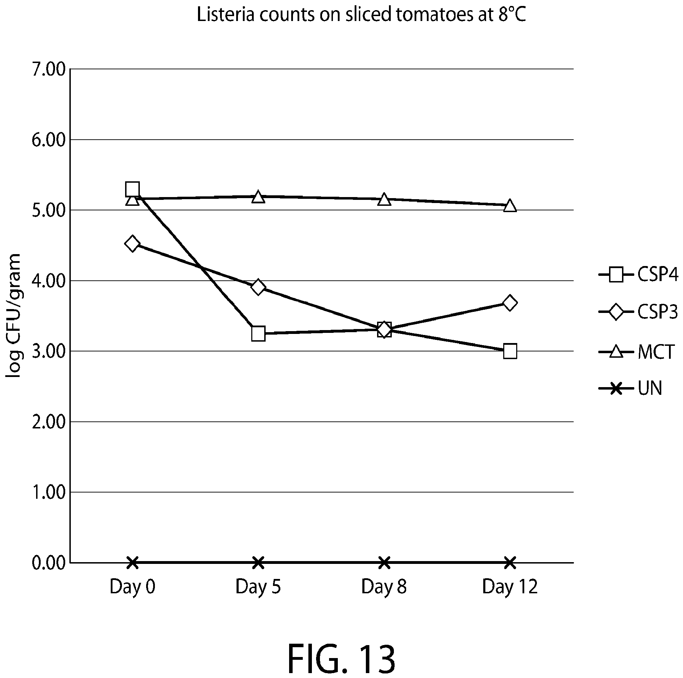

FIG. 13 shows that the CSP film also reduced *Listeria* by 1 log over 12 days of shelf life. This is consistent on every day samples were obtained, and demonstrated a 90% reduction of *Listeria monocytogenes* consistently for 12 days.

These results demonstrate the effectiveness of the CSP trays (according to the invention) with sliced tomatoes over a 12-day storage period to reduce the amounts of *Salmonella, E. coli,* and *Listeria* inoculated on the tomato slices and stored at 8°C. This is not a normal storage condition, but it simulates potential abuse within the cold chain that is noted in food safety storage practices as being the major cause of spoilage and pathogen growth. The use of these trays can contribute to reducing the potential for pathogens growth to harmful levels in sliced tomatoes.

### Example 5 - Quick Burst Antimicrobial Gas Release Curves

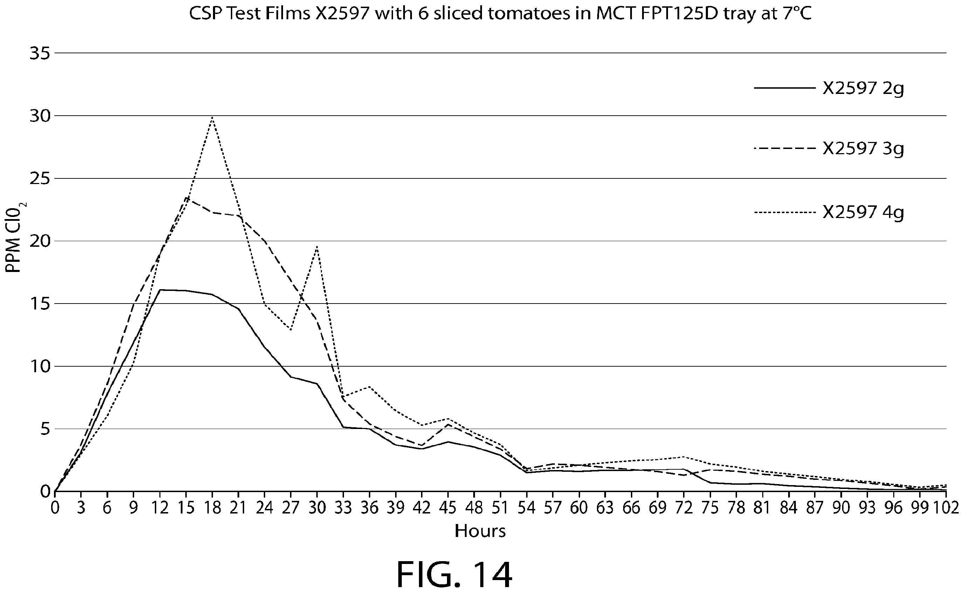

As described in Example 4, above, trays using 3g or 4g of X2597 film demonstrated significant activity in inhibiting pathogenic growth and proliferation over the testing period. The film formulations were configured to provide a quick burst release profile, as discussed elsewhere in this specification. FIG. 14 provides release curves for the 3g and 4g versions that were used in Example 4. FIG. 14 also provides a release curve for trays that used only 2g of film.

As FIG. 14 shows, the trays using 4g of film (CSP4) peaked at approximately 30 ppm of ClO₂ at about hour 18, while holding above 10 ppm between about hour 6 to hour 33. The trays using 3g of film (CSP3) peaked at approximately 23 ppm of ClO₂ at about hour 15, while holding above 10 ppm between about hour 6 to hour 33. As stated above in Example 4, these embodiments provided sufficient headspace concentration to achieve a desired microbial kill and did so without bleaching the tomatoes.

FIG. 14 also shows a release curve for trays using 2g of film. As the curve shows, that embodiment peaked at approximately 16 ppm of ClO₂ between hours 12 and 18. However, that curve shows that ClO₂ concentration only held above 10 ppm between about hours 8 to 26. In some circumstances, this concentration and release curve may provide sufficient antimicrobial effect, but in this instance, this concentration was not preferred.

## Claims

1. A package for inhibiting or preventing growth of microbes and/or for killing microbes in a closed container having a product located therein, the package comprising:
a. a closed container defining an interior space therein;
b. a product provided within the interior space;
c. a headspace formed within a volume of the interior space that is not occupied by the product; and
d. an antimicrobial releasing agent disposed within the interior space, the antimicrobial releasing agent releasing chlorine dioxide gas into the headspace by reaction of moisture with the antimicrobial releasing agent,
wherein the antimicrobial releasing agent is provided in at least one entrained polymer article located within the interior space, the entrained polymer article comprising a monolithic material that includes a base polymer, the antimicrobial releasing agent and a channeling agent, wherein the monolithic material features channels through the entrained polymer formed of the channeling agent, wherein the base polymer is a polypropylene, polyethylene, polyisoprene, polybutadiene, polybutene, polysiloxane, polycarbonate, polyamide, ethylene-vinyl acetate copolymer, ethylene-methacrylate copolymer, poly(vinyl chloride), polystyrene, polyester, polyanhydride, polyacrylonitrile, polysulfone, polyacrylic ester, polyurethane, polyacetal, or a copolymer or mixture thereof, and wherein the channeling agent is a polyethylene glycol (PEG), ethylene-vinyl alcohol (EVOH), polyvinyl alcohol (PVOH), glycerin polyamine, polyurethane, polycarboxylic acid, propylene oxide polymerisate-monobutyl ether, propylene oxide polymerisate, ethylene-vinyl acetate, nylon 6, nylon 66, or a mixture thereof.

2. The package of claim 1, wherein the antimicrobial releasing agent is provided in an amount that releases the chlorine dioxide gas to provide a headspace concentration of from 10 parts per million (PPM) to 35 PPM for a period of 16 hours to 36 hours.

3. The package of claim 1 or 2, wherein at the time the product is provided within the interior space, the product is contaminated by at least one type of pathogen, the antimicrobial releasing agent providing a controlled release of chlorine dioxide gas to effectuate, after a span of 13 days from when the product is provided within the interior space and under storage conditions of 7° C, at least a 2 log base 10 reduction in colony forming units per gram (CFU/g) of the at least one type of pathogen.

4. The package of claim 3, wherein the at least one type of pathogen is selected from the group consisting of: Salmonella, E. coli, Listeria and Geotrichum.

5. The package of any previous claim, wherein the product is a food product.

6. The package of claim 3 or 4, wherein the product is a food product and the amount of antimicrobial releasing agent and/or chlorine dioxide gas being present is an amount sufficient to effectuate the at least 2 log base 10 reduction in CFU/g of the at least one type of pathogen, without causing organoleptic degradation of the food product.

7. The package of any previous claim, wherein the entrained polymer article is a film having a thickness of from 0.1 mm to 1.0 mm.

8. The package of any previous claim, wherein the container comprises a base and one or more sidewalls extending vertically from the base leading to a top opening and a cover that closes and/or seals the top opening to make the closed container.

9. The package of claim 8, wherein the entrained polymer article is a film disposed on at least one sidewall, the at least one sidewall having a sidewall midline that is equidistant from the base and the opening, the film having a film midline that is equidistant from a top edge and a bottom edge of the film, wherein the film midline is located at least as high as the sidewall midline.

10. The package of claim 9, wherein the film is positioned at a vertical height that is 80% to 100% of the total height of the sidewall measured from the bottom surface of the base.

11. The package of any previous claim, wherein the antimicrobial releasing agent is a powdered mixture comprising an alkaline metal chlorite, a catalyst, and a humidity trigger.

12. The package of claim 11, wherein the alkaline metal chlorite is sodium chlorite or potassium chlorite, the catalyst is sulfuric acid clay, and the humidity trigger is calcium chloride.

13. The package of any previous claim, wherein the entrained polymer article is coated with a polymer liner configured to control moisture uptake into the entrained polymer.

14. The package of any previous claim, wherein the base polymer is a polypropylene, polyethylene, polyisoprene, polybutadiene, polybutene, ethylene-vinyl acetate copolymer, ethylene-methacrylate copolymer, poly(vinyl chloride), polystyrene, or a copolymer or mixture thereof.

15. The package of any previous claim, wherein the channeling agent is a polyethylene glycol (PEG), ethylene-vinyl alcohol (EVOH), polyvinyl alcohol (PVOH), or a mixture thereof.

16. A method for inhibiting or preventing the growth of microbes and/or for killing microbes in a closed container having a food product located therein, the method comprising:
a. providing a closed container defining an interior space therein;
b. providing a food product within the interior space;
c. providing a headspace formed within a volume of the interior space that is not occupied by the product; and
d. providing an antimicrobial releasing agent within the interior space that releases chlorine dioxide into the headspace by reaction of moisture with the antimicrobial releasing agent, wherein the antimicrobial releasing agent is provided in an amount sufficient to release the chlorine dioxide gas to provide a desired headspace concentration of the chlorine dioxide gas over a predetermined amount of time;
wherein the antimicrobial releasing agent is provided in at least one entrained polymer article located within the interior space, the entrained polymer article comprising a monolithic material that includes a base polymer, the antimicrobial releasing agent and a channeling agent, wherein the monolithic material features channels through the entrained polymer formed of the channeling agent, wherein the base polymer is a polypropylene, polyethylene, polyisoprene, polybutadiene, polybutene, polysiloxane, polycarbonate, polyamide, ethylene-vinyl acetate copolymer, ethylene-methacrylate copolymer, poly(vinyl chloride), polystyrene, polyester, polyanhydride, polyacrylonitrile, polysulfone, polyacrylic ester, polyurethane, polyacetal, or a copolymer or mixture thereof, and wherein the channeling agent is a polyethylene glycol (PEG), ethylene-vinyl alcohol (EVOH), polyvinyl alcohol (PVOH), glycerin polyamine, polyurethane, polycarboxylic acid, propylene oxide polymerisate-monobutyl ether, propylene oxide polymerisate, ethylene-vinyl acetate, nylon 6, nylon 66, or a mixture thereof; and
wherein if the product is contaminated by at least one type of pathogen at the time the product is provided within the interior space, the antimicrobial releasing agent providing a controlled release of chlorine dioxide gas to effectuate, after a span of 13 days under storage conditions of 7° C, at least a 2 log base 10 reduction in CFU/g of the at least one type of pathogen.

17. The method of claim 16, wherein the controlled release of the chlorine dioxide gas effectuates the reduction without causing organoleptic degradation of the food product.

18. The method of claim 16 or 17, wherein the antimicrobial releasing agent is a powdered mixture comprising an alkaline metal chlorite, a catalyst, and a humidity trigger.

19. The method of claim 18, wherein the alkaline metal chlorite is sodium chlorite or potassium chlorite, the catalyst is sulfuric acid clay, and the humidity trigger is calcium chloride.

20. The method of any of claims 16 to 19, wherein the antimicrobial releasing agent releases chlorine dioxide gas into the headspace by reaction of moisture with the antimicrobial releasing agent, wherein the antimicrobial releasing agent is provided in an amount sufficient to release chlorine dioxide gas to provide a headspace concentration of from 10 parts per million (PPM) to 35 PPM for a period of 16 hours to 36 hours.

21. The method of any of claims 16 to 20, wherein the food product is sliced, diced or cut and is selected from the group consisting of: tomatoes, washed peppers, washed onions, water melon, honey dew, cantaloupe, strawberries, peaches, pineapple, oranges, seafood, meat and poultry, or wherein the food product is whole or minimally processed produce selected from the group consisting of: broccoli, brussel sprouts, cabbage, cucumbers, bananas, herbs, whole peppers, carrots, root vegetables and potatoes.

22. The method of any of claims 16 to 21, wherein the antimicrobial releasing agent releases chlorine dioxide gas into the headspace by reaction of moisture with the antimicrobial releasing agent, wherein the antimicrobial releasing agent is provided in an amount sufficient to release the chlorine dioxide gas to provide a headspace concentration of from 8 PPM to 15 PPM for a period of 13 days.

23. The method of any of claims 16 to 22, wherein the at least one type of pathogen is selected from the group consisting of: Salmonella, E. coli, Listeria and Geotrichum.

24. The method of any of claims 16 to 23, wherein the base polymer is a polypropylene, polyethylene, polyisoprene, polybutadiene, polybutene, ethylene-vinyl acetate copolymer, ethylene-methacrylate copolymer, poly(vinyl chloride), polystyrene, or a copolymer or mixture thereof.

25. The method of any of claims 16 to 24, wherein the channeling agent is a polyethylene glycol (PEG), ethylene-vinyl alcohol (EVOH), polyvinyl alcohol (PVOH), or a mixture thereof.

26. Use of the package of any of claims 1 to 15 for storing a food product, wherein the food product exudes moisture that activates the antimicrobial releasing agent to release chlorine dioxide gas in the headspace.

27. The use of claim 26, wherein at the time the food product is provided within the interior space, the product is contaminated by at least one type of pathogen, the antimicrobial releasing agent providing a controlled release of chlorine dioxide gas effectuating, after a span of 13 days from when the product is provided within the interior space and under storage conditions of 7°C, at least a 2 log base 10 reduction in colony forming units per gram (CFU/g) of the at least one type of pathogen.

## Patentansprüche

1. Verpackung zur Hemmung oder Verhinderung des Wachstums von Mikroben und/oder zum Abtöten von Mikroben in einem geschlossenem Behälter mit einem darin befindlichen Produkt, wobei die Verpackung Folgendes umfasst:
a. einen geschlossenen Behälter, der darin einen Innenraum definiert,
b. ein Produkt, das innerhalb des Innenraums bereitgestellt wird,
c. einen Luftraum, der in einem Volumen des Innenraums gebildet ist, das nicht von dem Produkt eingenommen wird, und
d. ein antimikrobielles Freisetzungsmittel, das innerhalb des Innenraums angeordnet ist, wobei das antimikrobielle Freisetzungsmittel durch Reaktion von Feuchtigkeit mit dem antimikrobiellen Freisetzungsmittel Chlordioxidgas in den Luftraum freisetzt,
wobei das antimikrobielle Freisetzungsmittel in mindestens einem im Innenraum befindlichen mitgeführten Polymerartikel bereitgestellt wird, wobei der mitgeführte Polymerartikel ein monolithisches Material umfasst, das ein Basispolymer, das antimikrobielle Freisetzungsmittel und ein Kanalisierungsmittel einschließt, wobei das monolithische Material durch das Kanalisierungsmittel gebildete Kanäle durch das mitgeführte Polymer aufweist, wobei es sich bei dem Basispolymer um ein Polypropylen, ein Polyethylen, ein Polyisopren, ein Polybutadien, ein Polybuten, ein Polysiloxan, ein Polycarbonat, ein Polyamid, ein Ethylen-Vinylacetat-Copolymer, ein Ethylen-Methacrylat-Copolymer, ein Polyvinylchlorid, ein Polystyrol, einen Polyester, ein Polyanhydrid, ein Polyacrylnitril, ein Polysulfon, einen Polyacrylsäureester, ein Polyurethan, ein Polyacetal oder ein Copolymer oder eine Mischung davon handelt und wobei es sich bei dem Kanalisierungsmittel um ein Polyethylenglykol (PEG), einen Ethylenvinylalkohol (EVOH), einen Polyvinylalkohol (PVOH), ein Glycerinpolyamin, ein Polyurethan, eine Polycarbonsäure, einen Propylenoxidpolymerisatmonobutylether, ein Propylenoxidpolymerisat, Ethylenvinylacetat, Nylon 6, Nylon 66 oder eine Mischung davon handelt.

2. Verpackung nach Anspruch 1, wobei das antimikrobielle Freisetzungsmittel in einer Menge bereitgestellt wird, die das Chlordioxidgas so freisetzt, dass über einen Zeitraum von 16 Stunden bis 36 Stunden eine Luftraumkonzentration von 10 Parts per million (PPM) bis 35 PPM bereitgestellt wird.

3. Verpackung nach Anspruch 1 oder 2, wobei zu dem Zeitpunkt, zu dem das Produkt innerhalb des Innenraums bereitgestellt wird, das Produkt durch mindestens einen Erregertyp kontaminiert ist, wobei das antimikrobielle Freisetzungsmittel für eine gesteuerte Freisetzung von Chlordioxidgas sorgt, so dass nach einer Zeitspanne von 13 Tagen ab der Bereitstellung des Produkts in dem Innenraum und unter Lagerungsbedingungen von 7°C eine Reduktion der koloniebildenden Einheiten pro Gramm (Colony Forming Units per gram, CFU/g) des mindestens einen Erregertyps von mindestens 2 log₁₀ erzielt wird.

4. Verpackung nach Anspruch 3, wobei der mindestens eine Erregertyp aus der aus Salmonellen, E. coli, Listerien und Geotrichum bestehenden Gruppe ausgewählt ist.

5. Verpackung nach einem der vorhergehenden Ansprüche, wobei es sich bei dem Produkt um ein Nahrungsmittelprodukt handelt.

6. Verpackung nach Anspruch 3 oder 4, wobei es sich bei dem Produkt um ein Nahrungsmittelprodukt handelt und die Menge an antimikrobiellem Freisetzungsmittel und/oder vorhandenem Chlordioxidgas eine Menge ist, die ausreicht, um eine mindestens 2 log₁₀-Reduktion in CFU/g des mindestens einen Erregertyps zu bewirken, ohne eine organoleptische Zersetzung des Nahrungsmittelprodukts zu verursachen.

7. Verpackung nach einem der vorhergehenden Ansprüche, wobei es sich bei dem mitgeführten Polymerartikel um eine Folie mit einer Dicke von 0,1 mm bis 1,0 mm handelt.

8. Verpackung nach einem der vorhergehenden Ansprüche, wobei der Behälter eine Basis und eine oder mehrere Seitenwände, die sich vertikal von der Base zu einer oberen Öffnung erstrecken, und einen Deckel, der die obere Öffnung verschließt und/oder versiegelt, um den geschlossenen Behälter zu bilden, umfasst.

9. Verpackung nach Anspruch 8, wobei es sich bei dem mitgeführten Polymerartikel um eine Folie handelt, die an mindestens einer Seitenwand angeordnet ist, wobei die mindestens eine Seitenwand eine Seitenwand-Mittellinie aufweist, die sich im gleichen Abstand von der Basis und der Öffnung befindet, und die Folie eine Folien-Mittellinie aufweist, die sich im gleichen Abstand von einer Oberkante und einer Unterkante der Folie befindet, wobei die Folien-Mittellinie mindestens so hoch wie die Seitenwand-Mittellinie angeordnet ist.

10. Verpackung nach Anspruch 9, wobei die Folie in einer vertikalen Höhe, die 80% bis 100% der Gesamthöhe der Seitenwand, gemessen von der unteren Oberfläche der Basis, positioniert ist.

11. Verpackung nach einem der vorhergehenden Ansprüche, wobei es sich bei dem antimikrobiellen Freisetzungsmittel um eine ein Alkalichlorit, einen Katalysator und einen Feuchtigkeitsauslöser umfassende gepulverte Mischung handelt.

12. Verpackung nach Anspruch 11, wobei es sich bei dem Alkalichlorit um Natriumchlorit oder Kaliumchlorit handelt, es sich bei dem Katalysator um Schwefelsäureton handelt und es sich bei dem Feuchtigkeitsauslöser um Calciumchlorid handelt.

13. Verpackung nach einem der vorhergehenden Ansprüche, wobei der mitgeführte Polymerartikel mit einer Polymerauskleidung beschichtet ist, die so konfiguriert ist, dass sie die Feuchtigkeitsaufnahme in das mitgeführte Polymer steuert.

14. Verpackung nach einem der vorhergehenden Ansprüche, wobei es sich bei dem Basispolymer um ein Polypropylen, ein Polyethylen, ein Polyisopren, ein Polybutadien, ein Polybuten, ein Ethylen-Vinylacetat-Copolymer, ein Ethylen-Methacrylat-Copolymer, ein Polyvinylchlorid, ein Polystyrol oder ein Copolymer oder eine Mischung davon handelt.

15. Verpackung nach einem der vorhergehenden Ansprüche, wobei es sich bei dem Kanalisierungsmittel um ein Polyethylenglykol (PEG), einen Ethylenvinylalkohol (EVOH), einen Polyvinylalkohol (PVOH) oder eine Mischung davon handelt.

16. Verfahren zur Hemmung oder Verhinderung des Wachstums von Mikroben und/oder zum Abtöten von Mikroben in einem geschlossenen Behälter mit einem darin befindlichen Nahrungsmittelprodukt, wobei das Verfahren Folgendes umfasst:
a. die Bereitstellung eines geschlossenen Behälters, der darin einen Innenraum definiert,
b. die Bereitstellung eines Nahrungsmittelprodukts in dem Innenraum,
c. die Bereitstellung eines Luftraums, der in einem Volumen des Innenraums gebildet wird, der nicht von dem Produkt eingenommen wird, und
d. die Bereitstellung eines antimikrobiellen Freisetzungsmittels in dem Innenraum, das durch Reaktion von Feuchtigkeit mit dem antimikrobiellen Freisetzungsmittel Chlordioxid in den Innenraum freisetzt, wobei das antimikrobielle Freisetzungsmittel in einer Menge bereitgestellt wird, die ausreicht, das Chlordioxidgas so freizusetzen, dass eine gewünschte Luftraumkonzentration an Chlordioxidgas über eine vorbestimmte Zeitspanne bereitgestellt wird,
wobei das antimikrobielle Freisetzungsmittel in mindestens einem im Innenraum befindlichen mitgeführten Polymerartikel bereitgestellt wird, wobei der mitgeführte Polymerartikel ein monolithisches Material umfasst, das ein Basispolymer, das antimikrobielle Freisetzungsmittel und ein Kanalisierungsmittel einschließt, wobei das monolithische Material durch das Kanalisierungsmittel gebildete Kanäle durch das mitgeführte Polymer aufweist, wobei es sich bei dem Basispolymer um ein Polypropylen, ein Polyethylen, ein Polyisopren, ein Polybutadien, ein Polybuten, ein Polysiloxan, ein Polycarbonat, ein Polyamid, ein Ethylen-Vinylacetat-Copolymer, ein Ethylen-Methacrylat-Copolymer, ein Polyvinylchlorid, ein Polystyrol, einen Polyester, ein Polyanhydrid, ein Polyacrylnitril, ein Polysulfon, einen Polyacrylsäureester, ein Polyurethan, ein Polyacetal oder ein Copolymer oder eine Mischung davon handelt und wobei es sich bei dem Kanalisierungsmittel um ein Polyethylenglykol (PEG), einen Ethylenvinylalkohol (EVOH), einen Polyvinylalkohol (PVOH), ein Glycerinpolyamin, ein Polyurethan, eine Polycarbonsäure, einen Propylenoxidpolymerisatmonobutylether, ein Propylenoxidpolymerisat, Ethylenvinylacetat, Nylon 6, Nylon 66 oder eine Mischung davon handelt, und
wobei, wenn das Produkt zum Zeitpunkt der Bereitstellung des Produkts innerhalb des Innenraums durch mindestens einen Erregertyp kontaminiert ist, das antimikrobielle Freisetzungsmittel eine gesteuerte Freisetzung von Chlordioxidgas bereitstellt, die nach einer Zeitspanne von 13 Tagen unter Lagerungsbedingungen von 7°C mindestens eine 2 log₁₀-Reduktion in CFU/g des mindestens einen Erregertyps bewirkt.

17. Verfahren nach Anspruch 16, wobei die gesteuerte Freisetzung des Chlordioxidgases die Reduktion bewirkt, ohne eine organoleptische Zersetzung des Nahrungsmittelprodukts zu verursachen.

18. Verfahren nach Anspruch 16 oder 17, wobei es sich bei dem antimikrobiellen Freisetzungsmittel um eine ein Alkalichlorid, einen Katalysator und einen Feuchtigkeitsauslöser umfassende gepulverte Mischung handelt.

19. Verfahren nach Anspruch 18, wobei es sich bei dem Alkalichlorit um Natriumchlorit oder Kaliumchlorit handelt, es sich bei dem Katalysator um Schwefelsäureton handelt und es sich bei dem Feuchtigkeitsauslöser um Calciumchlorid handelt.

20. Verfahren nach einem der Ansprüche 16 bis 19, wobei das antimikrobielle Freisetzungsmittel durch Reaktion von Feuchtigkeit mit dem antimikrobiellen Freisetzungsmittel Chlordioxidgas in den Luftraum freisetzt, wobei das antimikrobielle Freisetzungsmittel in einer Menge bereitgestellt wird, die ausreicht, um Chlordioxidgas so freizusetzen, dass über einen Zeitraum von 16 Stunden bis 36 Stunden eine Luftraumkonzentration von 10 Parts per million (PPM) bis 35 PPM bereitgestellt wird.

21. Verfahren nach einem der Ansprüche 16 bis 20, wobei das Nahrungsmittelprodukt in Scheiben geschnitten, in Würfel geschnitten oder geschnitten ist und ausgewählt ist aus der Gruppe bestehend aus: Tomaten, gewaschenen Paprika, gewaschenen Zwiebeln, Wassermelone, Honigmelone, Cantaloup, Erdbeeren, Pfirsichen, Ananas, Orangen, Meeresfrüchten, Fleisch und Geflügel, oder wobei es sich bei dem Nahrungsmittelprodukt um ganze oder minimal verarbeitete landwirtschaftliche Erzeugnisse ausgewählt aus der Gruppe bestehend aus: Brokkoli, Rosenkohl, Kohl, Gurken, Bananen, Kräuter, ganze Paprika, Karotten, Wurzelgemüse und Kartoffeln handelt.

22. Verfahren nach einem der Ansprüche 16 bis 21, wobei das antimikrobielle Freisetzungsmittel durch Reaktion von Feuchtigkeit mit dem antimikrobiellen Freisetzungsmittel Chlordioxidgas in den Luftraum freisetzt, wobei das antimikrobielle Freisetzungsmittel in einer Menge bereitgestellt wird, die ausreicht, um Chlordioxidgas so freizusetzen, dass über einen Zeitraum von 13 Tagen eine Luftraumkonzentration von 8 PPM bis 15 PPM bereitgestellt wird.

23. Verfahren nach einem der Ansprüche 16 bis 22, wobei der mindestens eine Erregertyp aus der aus Salmonellen, E. coli, Listerien und Geotrichum bestehenden Gruppe ausgewählt ist.

24. Verfahren nach einem der Ansprüche 16 bis 23, wobei es sich bei dem Basispolymer um ein Polypropylen, ein Polyethylen, ein Polyisopren, ein Polybutadien, ein Polybuten, ein Ethylen-Vinylacetat-Copolymer, ein Ethylen-Methacrylat-Copolymer, ein Polyvinylchlorid, ein Polystyrol oder ein Copolymer oder eine Mischung davon handelt.

25. Verfahren nach einem der Ansprüche 16 bis 24, wobei es sich bei dem Kanalisierungsmittel um ein Polyethylenglykol (PEG), einen Ethylenvinylalkohol (EVOH), einen Polyvinylalkohol (PVOH) oder eine Mischung davon handelt.

26. Verwendung der Verpackung nach einem der Ansprüche 1 bis 15 zur Lagerung eines Nahrungsmittelprodukts, wobei das Nahrungsmittelprodukt Feuchtigkeit absondert, die das antimikrobielle Freisetzungsmittel zur Freisetzung von Chlordioxidgas in den Luftraum aktiviert.

27. Verwendung nach Anspruch 26, wobei zu dem Zeitpunkt, zu dem das Nahrungsmittelprodukt innerhalb des Innenraums bereitgestellt wird, das Produkt durch mindestens einen Erregertyp kontaminiert ist, wobei das antimikrobielle Freisetzungsmittel für eine gesteuerte Freisetzung von Chlordioxidgas sorgt, so dass nach einer Zeitspanne von 13 Tagen ab der Bereitstellung des Produkts in dem Innenraum und unter Lagerungsbedingungen von 7°C eine Reduktion der koloniebildenden Einheiten pro Gramm (Colony Forming Units per gram, CFU/g) von mindestens 2 log₁₀ des mindestens einen Erregertyps erzielt wird.

## Revendications

1. Emballage pour l'inhibition ou la prévention de la croissance de microbes et/ou pour la destruction de microbes dans un récipient clos possédant un produit situé en son sein, l'emballage comprenant :
a. un récipient clos définissant un espace intérieur en son sein ;
b. un produit fourni à l'intérieur de l'espace intérieur ;
c. un espace de tête formé à l'intérieur d'un volume de l'espace intérieur qui n'est pas occupé par le produit ; et
d. un agent de libération antimicrobien disposé à l'intérieur de l'espace intérieur, l'agent de libération antimicrobien libérant du gaz de dioxyde de chlore dans l'espace de tête par réaction d'humidité avec l'agent de libération antimicrobien,
l'agent de libération antimicrobien étant fourni dans au moins un article de polymère entraîné situé à l'intérieur de l'espace intérieur, l'article de polymère entraîné comprenant un matériau monolithique qui comporte un polymère de base, l'agent de libération antimicrobien et un agent canalisant, le matériau monolithique présentant des canaux à travers le polymère entraîné formés de l'agent canalisant, le polymère de base étant un polypropylène, un polyéthylène, un polyisoprène, un polybutadiène, un polybutène, un polysiloxane, un polycarbonate, un polyamide, un copolymère éthylène-acétate de vinyle, un copolymère éthylène-méthacrylate, un poly(chlorure de vinyle), un polystyrène, un polyester, un polyanhydride, un polyacrylonitrile, une polysulfone, un poly(ester acrylique), un polyuréthane, un polyacétal, ou un copolymère ou un mélange correspondant, et l'agent canalisant étant un polyéthylène glycol (PEG), un éthylène-alcool vinylique (EVOH), un poly(alcool vinylique) (PVOH), une glycérine polyamine, un polyuréthane, un poly(acide carboxylique), un monobutyléther de polymérisat d'oxyde de propylène, un polymérisat d'oxyde de propylène, un éthylène-acétate de vinyle, un nylon 6, un nylon 66, ou un mélange correspondant.

2. Emballage selon la revendication 1, l'agent de libération antimicrobien étant fourni en une quantité qui libère le gaz de dioxyde de chlore pour fournir une concentration dans l'espace de tête allant de 10 parties par million (ppm) à 35 ppm pendant une période de 16 heures à 36 heures.

3. Emballage selon la revendication 1 ou 2, dans lequel au moment où le produit est fourni à l'intérieur de l'espace intérieur, le produit est contaminé par au moins un type de pathogène, l'agent de libération antimicrobien fournissant une libération contrôlée de gaz de dioxyde de chlore pour effectuer, après une période de 13 jours à partir du moment où le produit est fourni à l'intérieur de l'espace intérieur et dans des conditions de stockage à 7 °C, au moins une réduction de 2 log en base 10 d'unités formant colonie par gramme (UFC/g) de l'au moins un type de pathogène.

4. Emballage selon la revendication 3, l'au moins un type de pathogène étant choisi dans le groupe constitué par : Salmonella, E. coli, Listeria et Geotrichum.

5. Emballage selon une quelconque revendication précédente, le produit étant un produit alimentaire.

6. Emballage selon la revendication 3 ou 4, le produit étant un produit alimentaire et la quantité d'agent de libération antimicrobien et/ou de gaz de dioxyde de chlore présents étant une quantité suffisante pour effectuer l'au moins une réduction de 2 log en base 10 d'UFC/g de l'au moins un type de pathogène, sans causer de dégradation organoleptique du produit alimentaire.

7. Emballage selon une quelconque revendication précédente, l'article de polymère entraîné étant un film possédant une épaisseur allant de 0,1 mm à 1,0 mm.

8. Emballage selon une quelconque revendication précédente, le récipient comprenant une base et une ou plusieurs parois latérales s'étendant de manière verticale de la base menant à une ouverture de sommet et une couverture qui clôt et/ou scelle l'ouverture de sommet pour réaliser le récipient clos.

9. Emballage selon la revendication 8, l'article de polymère entraîné étant un film disposé sur au moins une paroi latérale, l'au moins une paroi latérale possédant une ligne médiane de paroi latérale qui est équidistante de la base et de l'ouverture, le film possédant une ligne médiane de film qui est équidistante d'un bord de sommet et d'un bord de fond du film, la ligne médiane de film étant située au moins aussi haute que la ligne médiane de paroi latérale.

10. Emballage selon la revendication 9, le film étant positionné à une hauteur verticale qui représente 80 % à 100 % de la hauteur totale de la paroi latérale mesurée depuis la surface de fond de la base.

11. Emballage selon une quelconque revendication précédente, l'agent de libération antimicrobien étant un mélange pulvérulent comprenant un chlorite de métal alcalin, un catalyseur, et un déclencheur par l'humidité.

12. Emballage selon la revendication 11, le chlorite de métal alcalin étant le chlorite de sodium ou le chlorite de potassium, le catalyseur étant une argile à l'acide sulfurique, et le déclencheur par l'humidité étant le chlorure de calcium.

13. Emballage selon une quelconque revendication précédente, l'article de polymère entraîné étant revêtu par une doublure de polymère conçue pour réguler la captation de l'humidité dans le polymère entraîné.

14. Emballage selon une quelconque revendication précédente, le polymère de base étant un polypropylène, un polyéthylène, un polyisoprène, un polybutadiène, un polybutène, un copolymère éthylène-acétate de vinyle, un copolymère éthylène-méthacrylate, un poly(chlorure de vinyle), un polystyrène, ou un copolymère ou un mélange correspondant.

15. Emballage selon une quelconque revendication précédente, l'agent canalisant étant un polyéthylèneglycol (PEG), un éthylène-alcool vinylique (EVOH), un poly(alcool vinylique) (PVOH), ou un mélange correspondant.

16. Procédé pour l'inhibition ou la prévention de la croissance de microbes et/ou pour la destruction de microbes dans un récipient clos possédant un produit alimentaire situé en son sein, le procédé comprenant :
a. la mise à disposition d'un récipient clos définissant un espace intérieur en son sein ;
b. la mise à disposition d'un produit alimentaire à l'intérieur de l'espace intérieur ;
c. la mise à disposition d'un espace de tête formé à l'intérieur d'un volume de l'espace intérieur qui n'est pas occupé par le produit ; et
d. la mise à disposition d'un agent de libération antimicrobien à l'intérieur de l'espace intérieur qui libère du dioxyde de chlore dans l'espace de tête par réaction d'humidité avec l'agent de libération antimicrobien, l'agent de libération antimicrobien étant fourni en une quantité suffisante pour libérer le gaz de dioxyde de chlore pour fournir une concentration dans l'espace de tête souhaitée du gaz de dioxyde de chlore sur une quantité de temps prédéterminée ;
l'agent de libération antimicrobien étant fourni dans au moins un article de polymère entraîné situé à l'intérieur de l'espace intérieur, l'article de polymère entraîné comprenant un matériau monolithique qui comporte un polymère de base, l'agent de libération antimicrobien et un agent canalisant, le matériau monolithique présentant des canaux à travers le polymère entraîné formés de l'agent canalisant, le polymère de base étant un polypropylène, un polyéthylène, un polyisoprène, un polybutadiène, un polybutène, un polysiloxane, un polycarbonate, un polyamide, un copolymère éthylène-acétate de vinyle, un copolymère éthylène-méthacrylate, un poly(chlorure de vinyle), un polystyrène, un polyester, un polyanhydride, un polyacrylonitrile, une polysulfone, un poly(ester acrylique), un polyuréthane, un polyacétal, ou un copolymère ou un mélange correspondant, et l'agent canalisant étant un polyéthylène glycol (PEG), un éthylène-alcool vinylique (EVOH), un poly(alcool vinylique) (PVOH), une glycérine polyamine, un polyuréthane, un poly(acide carboxylique), un monobutyléther de polymérisat d'oxyde de propylène, un polymérisat d'oxyde de propylène, un éthylène-acétate de vinyle, un nylon 6, un nylon 66, ou un mélange correspondant ; et
dans lequel, si le produit est contaminé par au moins un type de pathogène au moment où le produit est fourni à l'intérieur de l'espace intérieur, l'agent de libération antimicrobien fournit une libération contrôlée de gaz de dioxyde de chlore pour effectuer, après une période de 13 jours dans des conditions de stockage à 7 °C, au moins une réduction de 2 log en base 10 d'UFC/g de l'au moins un type de pathogène.

17. Procédé selon la revendication 16, la libération contrôlée du gaz de dioxyde de chlore effectuant la réduction sans causer de dégradation organoleptique du produit alimentaire.

18. Procédé selon la revendication 16 ou 17, l'agent de libération antimicrobien étant un mélange pulvérulent comprenant un chlorite de métal alcalin, un catalyseur, et un déclencheur par l'humidité.

19. Procédé selon la revendication 18, le chlorite de métal alcalin étant le chlorite de sodium ou le chlorite de potassium, le catalyseur étant une argile à l'acide sulfurique, et le déclencheur par l'humidité étant le chlorure de calcium.

20. Procédé selon l'une quelconque des revendications 16 à 19, l'agent de libération antimicrobien libérant du gaz de dioxyde de chlore dans l'espace de tête par réaction d'humidité avec l'agent de libération antimicrobien, l'agent de libération antimicrobien étant fourni en une quantité suffisante pour libérer du gaz de dioxyde de chlore pour fournir une concentration dans l'espace de tête allant de 10 parties par million (ppm) à 35 ppm pendant une période de 16 heures à 36 heures.

21. Procédé selon l'une quelconque des revendications 16 à 20, le produit alimentaire étant tranché, coupé en dés ou coupé et étant choisi dans le groupe constitué par : les tomates, les poivrons lavés, les oignons lavés, la pastèque, le melon miel, le melon, les fraises, les pêches, l'ananas, les oranges, les fruits de mer, la viande et la volaille, ou le produit alimentaire étant un produit entier ou transformé de manière minimale choisi dans le groupe constitué par : le brocoli, les choux de Bruxelles, le chou, les concombres, les bananes, les fines herbes, les poivrons entiers, les carottes, les légumes racine et les pommes de terre.

22. Procédé selon l'une quelconque des revendications 16 à 21, l'agent de libération antimicrobien libérant du gaz de dioxyde de chlore dans l'espace de tête par réaction d'humidité avec l'agent de libération antimicrobien, l'agent de libération antimicrobien étant fourni en une quantité suffisante pour libérer le gaz de dioxyde de chlore pour fournir une concentration dans l'espace de tête allant de 8 ppm à 15 ppm pendant une période de 13 jours.

23. Procédé selon l'une quelconque des revendications 16 à 22, l'au moins un type de pathogène étant choisi dans le groupe constitué par : Salmonella, E. coli, Listeria et Geotrichum.

24. Procédé selon l'une quelconque des revendications 16 à 23, le polymère de base étant un polypropylène, un polyéthylène, un polyisoprène, un polybutadiène, un polybutène, un copolymère éthylène-acétate de vinyle, un copolymère éthylène-méthacrylate, un poly(chlorure de vinyle), un polystyrène, ou un copolymère ou un mélange correspondant.

25. Procédé selon l'une quelconque des revendications 16 à 24, l'agent canalisant étant un polyéthylèneglycol (PEG), un éthylène-alcool vinylique (EVOH), un poly(alcool vinylique) (PVOH), ou un mélange correspondant.

26. Utilisation de l'emballage selon l'une quelconque des revendications 1 à 15 pour le stockage d'un produit alimentaire, le produit alimentaire exsudant de l'humidité qui active l'agent de libération antimicrobien pour libérer du gaz de dioxyde de chlore dans l'espace de tête.

27. Utilisation selon la revendication 26, dans laquelle au moment où le produit alimentaire est fourni à l'intérieur de l'espace intérieur, le produit est contaminé par au moins un type de pathogène, l'agent de libération antimicrobien fournissant une libération contrôlée de gaz de dioxyde de chlore qui effectue, après une période de 13 jours à partir du moment où le produit est fourni à l'intérieur de l'espace intérieur et dans des conditions de stockage à 7 °C, au moins une réduction de 2 log en base 10 d'unités formant colonie par gramme (UFC/g) de l'au moins un type de pathogène.
